(19) Europäisches Patentamt European Patent Office Office européen des brevets

(11) **EP 1 825 418 B1**

(12) **EUROPEAN PATENT SPECIFICATION**

(45) Date of publication and mention of the grant of the patent:
**21.01.2015 Bulletin 2015/04**

(51) Int Cl.:
***G06K 9/00*** *(2006.01)*

(21) Application number: **05807999.7**

(22) Date of filing: **15.11.2005**

(86) International application number:
**PCT/EP2005/055974**

(87) International publication number:
**WO 2006/053867 (26.05.2006 Gazette 2006/21)**

(54) **FINGERPRINT BIOMETRIC MACHINE**

BIOMETRISCHE FINGERABDRUCKMASCHINE

MACHINE BIOMETRIQUE A EMPREINTES DIGITALES

(84) Designated Contracting States:
**AT BE BG CH CY CZ DE DK EE ES FI FR GB GR HU IE IS IT LI LT LU LV MC NL PL PT RO SE SI SK TR**

(30) Priority: **16.11.2004 US 989595**

(43) Date of publication of application:
**29.08.2007 Bulletin 2007/35**

(73) Proprietor: **International Business Machines Corporation**
**Armonk, NY 10504 (US)**

(72) Inventors:
• **BOLLE, Rudolf, Maarten**
**Bedford Hills, New York 10507 (US)**
• **CONNELL, Jonathan, Hudson**
**Cortlandt-Manor, New York 10567 (US)**
• **PANKANTI, Sharathchandra**
**Hampshire SO21 2JN (GB)**
• **RATHA, Nalini, Kanta**
**Yorktown Heights, New York 10598 (US)**

(74) Representative: **Ling, Christopher John**
**IBM United Kingdom Limited**
**Intellectual Property Law**
**Hursley Park**
**Winchester**
**Hampshire SO21 2JN (GB)**

(56) References cited:
**EP-A- 0 848 346    DE-A1- 10 260 641**

• **BEBIS G ET AL: "Fingerprint identification using Delaunay triangulation" INFORMATION INTELLIGENCE AND SYSTEMS, 1999. PROCEEDINGS. 1999 INTERNATIONAL CONFERENCE ON BETHESDA, MD, USA 31 OCT.-3 NOV. 1999, LOS ALAMITOS, CA, USA, IEEE COMPUT. SOC, US, 31 October 1999 (1999-10-31), pages 452-459, XP010362283 ISBN: 0-7695-0446-9**
• **BOER DE J ET AL: "INDEXING FINGERPRINT DATABASES BASED ON MULTIPLE FEATURES" PROCEEDINGS OF PRO RISC, November 2001 (2001-11), pages 300-306, XP001158915**
• **MAIO D ET AL: "Neural network based minutiae filtering in fingerprints" PATTERN RECOGNITION, 1998. PROCEEDINGS. FOURTEENTH INTERNATIONAL CONFERENCE ON BRISBANE, QLD., AUSTRALIA 16-20 AUG. 1998, LOS ALAMITOS, CA, USA, IEEE COMPUT. SOC, US, vol. 2, 16 August 1998 (1998-08-16), pages 1654-1658, XP010297892 ISBN: 0-8186-8512-3**
• **CALIFANO A ET AL: "MULTIDIMENSIONAL INDEXING FOR RECOGNIZING VISUAL SHAPES" 1 April 1994 (1994-04-01), IEEE TRANSACTIONS ON PATTERN ANALYSIS AND MACHINE INTELLIGENCE, IEEE SERVICE CENTER, LOS ALAMITOS, CA, US, PAGE(S) 373-392 , XP000439878 ISSN: 0162-8828 Section III. Multidimensional indexing**
• **R. CAPPELLI ET AL: "The state of the art in fingerprint classification" June 2003 (2003-06), SPRINGER , NEW YORK , XP002361697 ISBN: 0-387-95593-3 in "Automatic fingerprint recognition systems", Eds. N. Ratha et al page 183 - page 205**

**(Cont. next page)**

- R. GERMAIN ET AL.: "Fingerprint matching using transformation parameter clustering" IEEE COMPUTATIONAL SCIENCE AND ENGINEERING, October 1997 (1997-10), pages 42-49, XP002361694

**Description**

**FIELD OF THE INVENTION**

The present invention generally relates to the field of image processing. More specifically, the present invention relates to a machine representation of fingerprints based on geometric and photometric invariant properties of triangular images. Further, the present invention relates to intentionally distorting the machine representation of fingerprints based on triangles and then using the distorted representation in secure and privacy-preserving transaction processing.

**BACKGROUND OF THE INVENTION**

A biometric is a physical or behavioral characteristic of a person that can be used to determine or authenticate a person's identity. Biometrics such as fingerprint impressions have been used in law enforcement agencies for decades to identify criminals. More recently other biometrics such as face, iris and signature are starting to be used to identify persons in many types of transactions, such as check cashing and ATM use. An automated biometrics identification system analyzes a biometrics signal using pattern recognition techniques and arrives at a decision whether the query biometrics signal is already present in the database. An authentication system tests whether the query biometrics is equal, or similar, to the stored biometrics associated with the claimed identity. A generic automated biometrics system has three stages: (i) signal acquisition; (ii) signal representation and (iii) pattern matching.

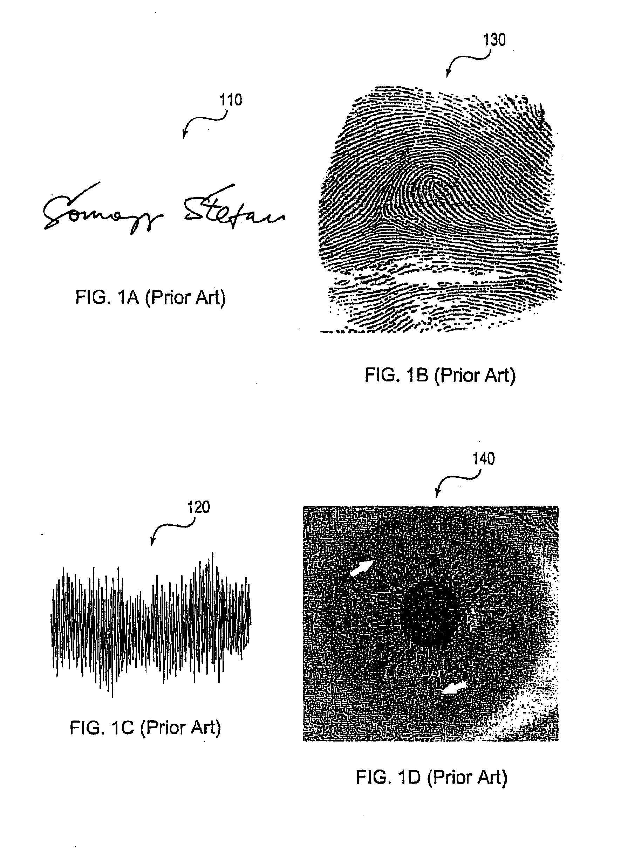

FIGs. 1A, 1B, 1C, and 1D are diagrams illustrating exemplary biometrics used by the prior art. In FIG. 1A, a signature 110 is shown. In FIG. 1B, a fingerprint impression 130 is shown. In FIG. 1C, a voice (print) 120 is shown. In FIG. 1D, an iris pattern 140 is shown.

Biometrics can be used for automatic authentication or identification of a (human) subject. Typically, the subject is enrolled by offering a sample biometric when opening, e.g., a bank account or subscribing to an internet service. From this sample biometric, a template is derived that is stored and used for matching purposes at the time the user wishes to access the account or service. A biometric more or less uniquely determines a person's identity. That is, given a biometric signal, the signal is either associated with one unique person or significantly narrows down the list of people with whom this biometric might be associated. Fingerprints are excellent biometrics, since two people with the same fingerprints have never been found. On the other hand, biometric signals such as weight or shoe size are poor biometrics since these physical characteristics obviously have little discriminatory value.

Biometrics can be divided up into behavioral biometrics and physiological biometrics. Behavioral biometrics include signatures 110 and voice prints 120 (see FIG. 1). Behavioral biometrics depend on a person's physical and mental state and are subject to change, possibly rapidly change, over time. Physiological biometrics, on the other hand, are subject to much less variability. For a fingerprint, the basic flow structure of ridges and valleys (see fingerprint 130 in FIG. 1B) is essentially unchanged over a person's life span. Even if the ridges are abraded away, they will regrow in the same pattern. An example of another physiological biometric is the circular texture of a subject's iris (see iris 140 in FIG. 1D). This is believed to be even less variable over a subject's life span. To summarize, there exist behavioral biometrics (e.g., signature 110 and voice 120) which are under control of the subjects to a certain extent, as opposed to physiological biometrics whose appearance cannot be influenced (iris 140) or can be influenced very little (fingerprint 130).

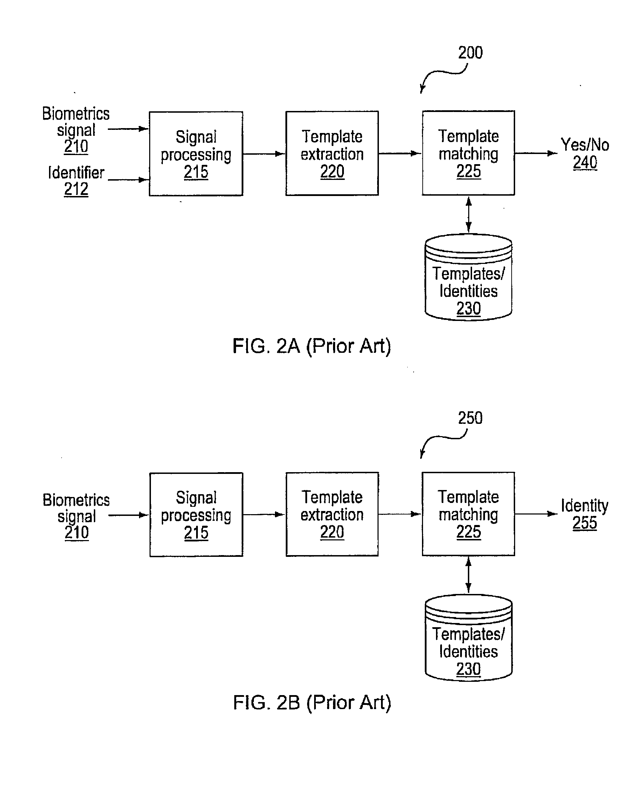

Referring now to FIG. 2A, a typical, legacy prior-art automatic fingerprint authentication system 200 has a biometrics signal (e.g., a fingerprint image) as input 210. The system includes a signal processing stage 215, a template extraction stage 220, and a template matching stage 225. The signal processing stage 215 extracts features and the template extraction stage 220 generates a template based on the extracted features. Along with the biometrics signal 210, an identifier 212 of the subject is input to the system 200. During the template matching stage 225, the template associated with this particular identifier is retrieved from some database of templates 230 indexed by identities (identifiers). If there is a Match/No Match between the template extracted in stage 220 and the retrieved template from database 230, a corresponding 'Yes/No' 240 answer is the output of the system 200. Matching is typically based on a similarity measure: if the measure is significantly large, the answer is 'Yes'; otherwise, the answer is 'No.'

The biometric signal 210 that is input to the system can be acquired either locally with the matching application on the client, or remotely with the matching application running on some server. Hence, architecture of system 200 applies to both networked and non-networked applications.

The following article describes examples of the state of the prior art: Ratha et al., "Adaptive Flow Orientation Based Feature Extraction in Fingerprint Images", Pattern Recognition, Vol. 28, No. 11, pp. 1657-1672, Nov. 1995, the disclosure of which is incorporated by reference herein in its entirety.

Referring now to FIG. 2B, a typical, legacy prior-art automatic fingerprint identification system 250 is shown. The prior art system 250 in FIG. 2B is similar to system 200 in FIG. 2A, but it is an identification system instead of an authentication system. A typical, legacy prior-art automatic biometrics signal identification system 250 takes only a biometric signal 210 as input. Again, the system 250 includes a signal processing stage 215, a template extraction stage 220, and a template matching stage 225. The signal processing stage 215 extracts features and the template extraction stage 220 generates a template based on the extracted features. During the template matching stage 225, the extracted template is matched to all <template, identifier> pairs stored in database 230. If there exists a good match between the template extracted in stage 220 and a template associated with some identity in database 230, this associated identity is output as the result 255 of the identification system 250. If no match can be found in database 230, then the output identity 255 could be set to NIL. The biometric signal 210 can be acquired either locally on a client machine, or remotely with the matching application running on some server. Hence, the architecture of system 250 applies equally to networked or non-networked applications.

Automated biometrics in essence amounts to signal processing of a biometrics signal 210 to extract features 215. A biometrics signal is some nearly unique characteristic of a person. A feature is a subcharacteristic of the overall signal, such as a ridge bifurcation in a fingerprint or the appearance of the left eye in a face image. Based on these features, a more compact template representation is typically constructed 220. Such templates are used for matching or comparing 225 with other similarly acquired and processed biometric signals. As described below, it is the process of obtaining templates from biometrics signals that is slightly different when privacy preserving, revocable biometrics are used.

A specific signal representation of a fingerprint in terms of triangles formed by triples of minutiae is disclosed in United States Patent No. 6,041,133, entitled "Method and Apparatus for Fingerprint Matching Using Transformation Parameter Clustering Based on Local Feature Correspondences", issued on March 21, 2000, and incorporated by reference herein in its entirety.

Invariant geometric properties of triangles are computed and stored in hash tables pointing to lists of enrolled fingerprints during the registration (enrollment) stage. At authentication time, again invariant geometric properties of triangles are extracted from a fingerprint image and these triangles are used to vote for possible matches. This allows for fast searching of large fingerprint databases. This system is designed for large-scale one-to-many searching.

Bebis et al: "Fingerprint identification using Delaunay triangulation", Proc. of Intl. Conf. on Information Intelligence and Systems, 1999, pages 452 to 459 discloses an indexing-based approach to fingerprint identification which associates a unique topological structure with the fingerprint minutiae using Delaunay triangulation. It does not disclose the intentional distortion of the fingerprint data in order to enhance privacy or to allow for the revocation of authorisation.

de Boer et al: "Indexing fingerprint databases based on multiple features", Proceedings of PRO RISC, November 2001, pages 300-306 discloses the identification of all minutiae triplets in a fingerprint. For a query fingerprint, all triplets are extracted and for each triplet, a hash table is used to determine which matching fingerprints contain those triplets. It does not disclose the intentional distortion of the fingerprint data in order to enhance privacy or to allow for the revocation of authorisation.

## PROBLEMS WITH THE PRIOR ART

One of the impediments in advancing the use of biometric authentication in commercial transaction systems is the public's perception of invasion of privacy. Beyond private information such as name, date of birth and other similar parametric data, the user is asked to give images of their body parts, such as fingers, face, and iris. These images, or other biometrics signals, will be stored in digital form in databases in many cases. With this digital technology, it may be very easy to copy biometrics signals and use the data for other purposes. For example, hackers could snoop on communication channels and intercept biometrics signals and reuse them without the knowledge of the proper owner of the biometrics. Another concern is the possible sharing of databases of biometrics signals with law enforcement agencies, or sharing of these databases among commercial organizations. The latter, of course, is a concern for any data gathered about customers. These privacy concerns can be summarized as follows. First, much data about customers and customer behavior is stored. The public is concerned about every bit of additional information that is known about them. Second, the public is, in general, suspicious of the central storage of information that is associated with individuals. This type of data ranges from medical records to biometrics. These databases can be used and misused for all sorts of purposes, and the databases can be shared among organizations. Third, the public is, rightfully or wrongfully so, worried about giving out biometrics because these could be used for matching against databases used by law enforcement agencies. They could be, for example, matched against the FBI or INS fingerprint databases to obtain criminal records.

Hence, the transmission and storage of biometrics coupled with other personal parametric data is a concern. The potential use of these biometrics for searching other databases is a further concern.

Many of these concerns are aggravated by the fact that a biometric cannot be changed. One of the properties that make biometrics so attractive for authentication purposes, their invariance over time, is also one of the liabilities of biometrics. When a credit card number is somehow compromised, the issuing bank can assign the customer a new credit card number. In general, when using artificial means, such an authentication problem can be easily fixed by revoking (canceling) the compromised token and reissuing a new token to the user. When a biometric is compromised, however, the user has very few options. In the case of fingerprints, the user has nine other options (his other fingers), but in the case of face or iris, the alternatives are quickly exhausted or nonexistent.

A further inconvenience of biometrics is that the same biometrics may be used for several, unrelated applications. That is, the user may enroll for several different services using the same biometrics: for building access, for computer login, for ATM use, and so on. If the biometrics is compromised in one application, the biometrics is essentially compromised for all of them and somehow would need to be changed.

Some prior art methods propose revoking keys and other authentication tokens. Since the keys and certificates are machine generated, they are easy to revoke conceptually.

A prior art image morphing technique that creates intermediate images to be viewed serially to make a source object metamorphose into a different object is disclosed in United States Patent No. 5,590,261 (hereinafter the "'261 Patent"), entitled "Finite-element Method for Image Alignment and Morphing", issued on Dec. 31, 1996, the disclosure of which is herein incorporated by reference in its entirely.

The '261 Patent describes a finite element-based method to determine the intermediate images based on motion modes of embedded nodal points in the source and the target image. Embedded nodal points that correspond to feature points in the images are represented by a generalized feature vector. Correspondence of feature points in the source and target image are determined by closeness of points in the feature vector space. This technique is applied to the field of video production not biometrics, and focuses on a correspondence assignment technique that reduces the degree to which human intervention is required in morphing. Furthermore, for this technique to be applicable, the source and the target images must be known.

The following patents also are incorporated by reference herein in their entirety: United States Patent No. 5,793,868 (hereinafter the "'868 Patent"), entitled "Certificate Revocation System", issued on Aug. 11, 1998; United States Patent No. 5,666,416 (hereinafter the "'416 Patent"), entitled "Certificate Revocation System", issued on Sept. 9, 1997; and United States Patent No. 5,717,758 (hereinafter the "'758 Patent"), entitled "Witness-based Certificate Revocation System", issued on Feb. 10, 1998.

The '868 Patent discloses certificate management involving a certification authority (CA). Often, when the key in a public key infrastructure has been compromised, or the user is no longer a client of a particular CA, the certificate has to be revoked. The CA periodically issues a certificate revocation list (CRL) which is very long and needs to be broadcast to all. The disclosure proposes to generate a hash of at least a part of the certificate. Minimal data identifying the certificate is added to the CRL if the data items are shared by two or more revoked certificates. The proposed method thus optimizes the size of the CRL, hence, lessening transmission time. The '868 Patent deals with machine generated certificates, not signals of body parts. Furthermore, it is concerned with making the revocation process more efficient rather than with making it possible at all.

The '416 Patent deals with public key management without explicitly providing any list of revoked certificates. A user can receive an individual piece of information about any public key certificate. Methods are described to provide positive information about the validity status of each not-yet expired certificate. In the proposed method, the CA will provide certificate validity information without requiring a trusted directory. In addition, it also describes schemes to prove that a certificate was never issued or even existed in a CA. The techniques described here are only applicable to machine generated keys that are easily canceled, not to biometrics.

The '758 Patent further deals with a public key infrastructure. In the proposed scheme, an intermediary provides certificate information by receiving authenticated certificate information, then processing a portion of the authenticated information to obtain the deduced information. If the deduced information is consistent with the authentication information, a witness constructs the deduced information and authenticates the deduced information. The main novelty of the disclosure is that it avoids transmission of a long certificate revocation list (CRL) to all users and the handling of non-standard CRL is left to the intermediary. The method addresses issues relevant to machine generated keys and their management, but not to biometric signals. Again, the focus is on the privacy of certificates and the efficiency of revocation, not on making revocation possible in the first place.

The following patent is incorporated by reference in its entirety: Perlman et al., "Method of Issuance and Revocation of Certificate of Authenticity Used in Public Key Networks and Other Systems", U.S. Patent No. 5,261,002 (hereinafter the "'002 Patent"), Nov. 1993, the disclosure of which is herein incorporated by reference in its entirely.

The '002 Patent describes a technique to issue and revoke user certificates containing no expiration dates. The lack of expiration dates minimizes overhead associated with routine renewals. The proposed method issues a signed list of invalid certificates (referred to as a blacklist) containing a blacklist start date, a blacklist expiration date, and an entry for each user whose certificate was issued after the black list start date but is now invalid. The method describes revocation and issuance of machine generated certificates, but does not address the special properties of biometrics.

Standard cryptographic methods and biometric images or signals are combined in the following patent, which is incorporated by reference in its entirety: United States Patent No. 4,993,068 (hereinafter the "'068 Patent"), entitled "Unforgeable Personal Identification System", issued on Feb. 12, 1991, the disclosure of which is herein incorporated by reference in its entirely.

The '068 Patent deals with combining standard cryptographic methods and biometric images or signals. The proposed scheme encrypts a set of physically immutable identification credentials (e.g., biometrics) of a user and stores them on a portable memory device. It uses modern public key or one-way cryptographic techniques to make the set of credentials unforgeable. These credentials are stored in a credit-card sized portable memory device for privacy. At a remote site, the user presents the physical biometrics (i.e., himself or his body parts) and the portable memory card for comparison by a server. This technique, though useful, is susceptible to standard attacks on the encryption scheme and can potentially expose the biometrics if the encryption is broken. Furthermore, after decryption, the true biometrics signals are available to the server for possible comparison with other databases thus lessening personal privacy.

The following patent is incorporated by reference in its entirety: United States Patent No. 5,434,917 (hereinafter the "'917 Patent"), entitled "Unforgeable Identification Device, Identification Device Reader and Method of Identification", issued on July 18, 1995.

The '917 Patent deals with designing an unforgeable memory card at an affordable price without the need to have a processor on the card. The plastic support of the card is manufactured with randomly distributed ferrite particles. This unique distribution of particles is combined with standard user identification information to create a secure digital signature. The digital signature along with the owner ID is then stored on the card (by use of a magnetic strip or similar means). The reader authenticates the user by reading the ID and also sensing the ferrite particle distribution. It then checks that the stored digital signature is the same signature as would be formed by combining the given ID and the observed particle distribution. The unforgeable part of the technique is related to the random distribution of ferrite particles in the plastic substrate during fabrication process. The identification details of the owner are not related to biometrics.

A software system called "Stirmark" that is directed to evaluating the robustness of data hiding techniques is described by Petitcolas et al., in "Evaluation of Copyright Marking Systems", Proc. IEEE Multimedia Systems 99, Vol. 1, pp. 7-11 and 574--579, June 1999.

The Stirmark system applies minor, unnoticeable geometric distortions in terms of slight stretches, shears, shifts, bends, and rotations. Stirmark also introduces high frequency displacements, a modulated low frequency deviation, and smoothly distributed error into samples for testing data hiding techniques. This disclosure is concerned with testing if a watermark hidden in the signal can be recovered even after these unnoticeable distortions. This system does not intentionally distort a signal in order to enhance privacy or to allow for revocation of authorization.

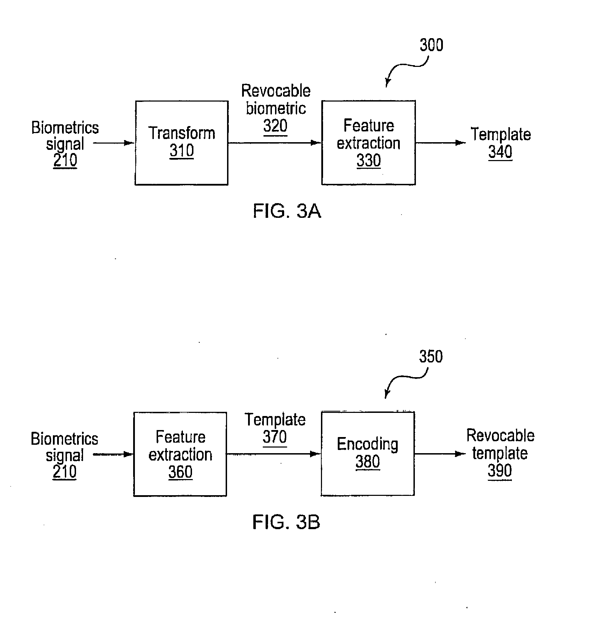

FIGs. 3A and 3B are block diagrams illustrating two different systems that employ two different approaches regarding how a revocable biometric representation can be constructed from a biometrics signal 210. In system 300 (FIG. 3A), the biometrics are distorted by a transformation module 310 to obtain a revocable biometric 320. Signal processing for feature extraction 330 is then used to obtain a template 340. As described previously, this template is a compact machine representation which is used for matching purposes. By contrast, in system 350 (FIG. 3B), first feature extraction 360 (signal processing) is performed to produce a more compact representation. Next, a template 370 is extracted and then, finally, an encoding 380 is used to construct a revocable template 390.

Both approaches are referred to as revocable biometrics because, from the application viewpoint, it makes no difference how the revocability is introduced. The important point in both implementations is that different encodings can be chosen for different people, or for the same person at different times and applications. Furthermore, it is important that these encodings are reproducible so that a similar result is obtained each time the biometrics signal from the same person is processed. In the discussion to follow, specific methods for 310 and 380 are described for obtaining suitably encoded biometric signals and biometric templates.

The following patent application is incorporated by reference in its entirety: Bolle et al., "System and Method for Distorting a Biometric for Transactions with Enhanced Security and Privacy," U.S. Patent Application No. 09/595935 (hereinafter the "'935 Patent Application"), filed June 16, 2000.

The '935 Patent Application proposes distortion of either the biometric template or the biometric signal for various biometric identifiers (images and signals). The '935 Patent Application does *not* propose practical fingerprint representations in terms of triangles; it does not propose practical revocable fingerprint representations in terms of transforming triangles. The image data is not transformed specifically by warping triangular image data to fit it into transformed triangles or to transform triangles from 1-dimensional or m-dimensional descriptions to transformed 1-dimensional or m-dimensional descriptions.

## SUMMARY OF THE INVENTION

These and other drawbacks and disadvantages of the prior art are addressed by the present invention, which is directed to fingerprint biometric machine representations based on triangles.

According to a first aspect of the present invention, there is provided an apparatus for generating a revocable numerical representation of a biometric characteristic, comprising: a biometric feature extractor arranged to: extract data identifying predetermined features from a biometric characteristic depicted in an image; define at least one polygon, wherein the or each such polygon is determined by the position within the image of at least some of the features, each polygon having at least one geometric feature, the data defining which is invariant with respect to similarity transforms, this representation forming a first geometric part of the extracted data applied to the data defining at least a portion of the image; a data transformer arranged to apply a numerical transform to the data defining the at least a portion of the image to obtain at least one feature representation that includes said at least one of the geometric feature, wherein said data transformer is further arranged to apply a predetermined distortion to said at least one obtained feature representation by applying at least one of the first numerical transforms to the data defining the at least one feature representation to obtain at least one transformed feature representation; a photometric feature extractor arranged to extract from the image defining data at least one predetermined photometric feature, the data defining which feature is non-geometric and invariant with respect to any rigid transform applied to said data defining the portion of the image, each of the at least one photometric feature being associated with a region of the image containing at least a part of a polygon; and transforming said data defining said at least one photometric feature and said at least one transformed feature representation creating a single representation from the at least one photometric feature and the transformed feature representation by applying a decorrelating transform, this representation forming a second photometric part of the extracted data; create a combined representation by concatenating the geometric part of the extracted data and the transformed photometric part of the extracted data; a data transformer arranged to apply a numerical transform to the combined representation, wherein said data transformer is further arranged to apply a predetermined distortion to the combined representation before applying the numerical transform thereby creating a revocable numerical representation of the biometric characteristic.

According to a second aspect of the present invention, there is provided a method for generating a revocable numerical representation of a biometric characteristic, comprising: extracting data identifying predetermined features from a biometric characteristic depicted in an image; defining at least one polygon, wherein the or each such polygon is determined by the position within the image of at least some of the features, each polygon having at least one geometric feature, which is invariant with respect to similarity transforms, this representation forming a first geometric part of the extracted data; extracting from, by a photometric feature extractor, the image defining data at least one predetermined photometric feature, which feature is non-geometric and invariant with respect to any rigid transform applied to said data defining the portion of the image, said photometric feature being associated with an image region containing at least one part of a polygon; and transforming said data defining said at least one photometric feature by applying a decorrelating transform, this representation forming a second photometric part of the extracted data; creating a combined representation by concatenating the geometric part of the extracted data and the transformed photometric part of the extracted data; applying, by a data transformer, a numerical transform to the combined representation, wherein said data transformer is further arranged to apply a predetermined distortion to the combined representation before applying the numerical transform thereby creating a revocable numerical representation of the biometric characteristic.

These and other aspects, features and advantages of the present invention will become apparent from the following detailed description of exemplary embodiments, which is to be read in connection with the accompanying drawings.

## BRIEF DESCRIPTION OF THE DRAWINGS

Preferred embodiments of the present invention will now be described, by way of example only, with reference to the accompanying drawings in which:

FIGs. 1A through 1D are diagrams illustrating exemplary biometrics used by the prior art;
FIG. 2A is a block diagram illustrating an automated biometrics system for authentication according to the prior art;
FIG. 2B is a block diagram illustrating an automated biometrics system for identification according to the prior art;
FIGs 3A is a diagram illustrating a system where a biometric signal is first distorted and then a template is extracted, according to the prior art;
FIG. 3B is a diagram illustrating a system where a template is first extracted and then intentionally distorted, according to the prior art;
FIG. 4 is a pictorial representation of a fingerprint and the feature points therein, according to an illustrative embodiment of the present invention;
FIGs. 5 and 6 are pictorial illustrations of the geometric features that characterize the feature points of Figure 4, according to an illustrative embodiment of the present invention;
FIGs. 7A and 7B are diagrams illustrating the extraction of photometric invariants, according to various illustrative embodiments of the present invention;
FIG. 7C is a diagram illustrating a preferred approach of training the encoding process, according to an illustrative embodiment of the present invention;
FIG. 7D is a diagram illustrating an example of encoding the training set, according to an illustrative embodiment of the present invention;

FIG. 7E through 7G are diagrams illustrating a "Quantize and enumerate" encoding option, according to an illustrative embodiment of the present invention;

FIGs. 7H and 7I are diagrams illustrating an "Order, quantize and enumerate" encoding option, according to an illustrative embodiment of the present invention;

FIG. 8A is a diagram illustrating an example of locally transforming the geometric and photometric information of a piece of fingerprint image data, according to an illustrative embodiment of the present invention;

FIG. 8B is a diagram illustrating a specific class of the linear/nonlinear local transforms of image data, according to an illustrative embodiment of the present invention;

FIG. 8C is a diagram illustrating a process of recording the unique enumerable discrete vector to increase privacy, according to an illustrative embodiment of the present invention;

FIG. 8D is a diagram illustrating a process of recording the unique enumerable discrete scalar to increase privacy, according to an illustrative embodiment of the present invention;

FIG. 8E is a diagram illustrating an implementation recording of the unique enumerable discrete scalar to increase privacy, according to an illustrative embodiment of the present invention;

FIG. 9A is a diagram illustrating a fingerprint database as a set of sparse bit sequences, according to an illustrative embodiment of the present invention;

FIG. 9B is a diagram illustrating a fingerprint database in a dense tree structure, according to an illustrative embodiment of the present invention;

FIG. 10 is a flowchart of the encoding process of converting one or more image features into one unique enumerable discrete number or a unique enumerable discrete vector; and

FIG. 11 is a flowchart of a preferred encoding process of converting one or more image features into one unique enumerable discrete scalar or a unique enumerable discrete vector with recording for increased privacy, according to an illustrative embodiment of the present invention;

## DETAILED DESCRIPTION OF THE INVENTION

For many applications, user authentication is an important and essential component. Automated biometrics can provide accurate and non-repudiable authentication methods. In the digital world, the same advantage comes with several serious disadvantages. The digital representation of a biometrics signal can be used for many applications unbeknownst to the owner. Secondly, the signal can be easily transmitted to law enforcement agencies thus violating the users' privacy. The present invention provides methods to overcome these problems employing transformations of fingerprint representations based on triangles to intentionally distort the original fingerprint representation so that no two installations share the same resulting fingerprint representation.

The present invention describes revocable fingerprint representations, specific instances of revocable biometric representations, also referred to herein as "anonymous" biometrics". Unlike traditional biometric representations, these biometric representations can be changed when they are somehow compromised. A revocable biometric representation is a transformation of the original biometric representation which results in an intentional encoded biometric representation of the same format as the original representation. This distortion is repeatable in the sense that, irrespective of variations in recording conditions of the real-world biometric, it generates the same (or very similar) encoded biometric representations each time. If the encoding is non-invertible, the original biometric representation can never be derived from the revocable biometric, thus ensuring extra privacy for the user. More specifically, a focus is made on fingerprint representations in terms of encoded triangles. However, it is to be appreciated that the present invention is not limited solely to fingerprints and, thus, other biometrics may be readily employed in accordance with the present invention.

Fingerprint image compression could be considered to be revocable fingerprint representations, however, the present invention is different from these prior art techniques. In compression, there exist lossy methods which do not preserve all the details of the original signal. Such transforms are indeed noninvertable. Depending on the exact method of compression, there are even some image processing operations that can be performed directly on the compressed data. In general, however, the data is decompressed before being used. Moreover, unlike encryption, the method for doing this is usually widely known and thus can be applied by any party. Moreover, the decompressed signal is, by construction, very close to the original signal. Thus, it can often be used directly in place of the original signal so there is no security benefit to be gained by this transformation. Furthermore, altering the parameters of the compression engine (to cancel a previous distortion) will result in a decompressed signal which is still very similar to the original.

While fingerprint encryption also could be considered to be a revocable fingerprint representation, the present invention is different from these prior art techniques. In encryption, the transmitted signal is not useful in its raw form; it must be decrypted at the receiving end to make sense. Furthermore, all encryption systems are, by design, based on invertable transforms and will not work with noninvertable functions. With encryption systems, it would still be possible to share the signal with other agencies without the knowledge of the owner. Revocable fingerprint representations are encodings of fingerprints that can be matched in the encoded domain. Unlike encrypted fingerprint representations, no decryption key is needed for matching two fingerprints.

Traditional biometrics, such as fingerprints, have been used for (automatic) authentication and identification purposes for several decades. Signatures have been accepted as a legally binding proof of identity and automated signature authentication/verification methods have been available for at least 20 years.

One preferred embodiment of the present invention is the use of triangles to represent fingerprints. Therefore, without loss of generality, a description will now be given regarding applying triangles to fingerprints. Note that other geometric shapes can be used with other non- fingerprint biometrics. For example, face images can be represented by quadrilaterals made of four spatially adjacent landmark face feature points (e.g., corner of lips, nostrils, corner of eyes, etc.). Moreover, the present invention may include, but is not limited to, the following geometric shapes: a chain-code, a polyline, a polygon, a normalized polygon, a square, a normalized square, a rectangle, a normalized rectangle, a triangle, and a normalized triangle.

Further, it is to be appreciated that while the present invention is primarily described with respect to a fingerprint image, the present invention may be applied to images that correspond to, but are not limited to, the following: a complete biometric, a partial biometric, a feature, a feature position, a feature property, a relation between at least two of the features, a subregion of another image, a fingerprint image, a partial fingerprint image, an iris image, a retina image, an ear image, a hand geometry image, a face image, a gait measurement, a pattern of subdermal blood vessels, a spoken phrase, and a signature.

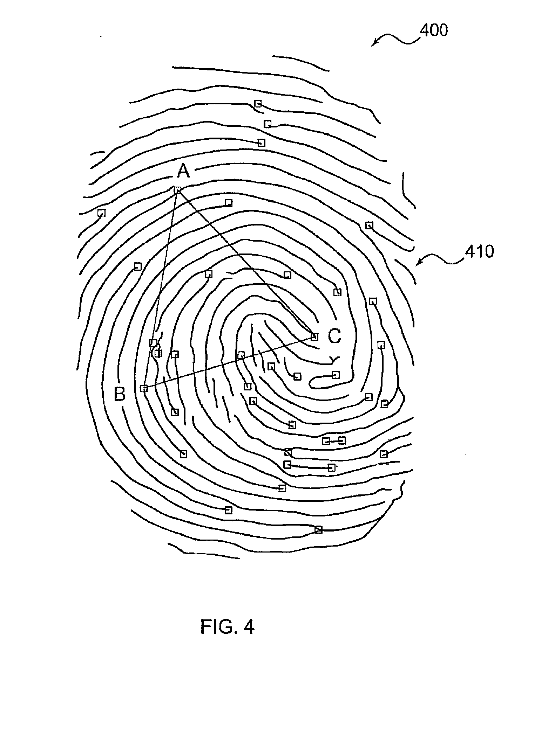

Referring to FIG. 4, a fingerprint is typically represented by data characterizing a collection of feature points (commonly referred to as "minutiae" - typically 410) associated with the fingerprint 400. The feature points associated with a fingerprint are typically derived from an image of the fingerprint utilizing image processing techniques. These techniques, as stated above, are well known and may be partitioned into two distinct modes: an acquisition mode and a recognition mode.

In some preferred acquisition modes, for one or more triangular representations of fingerprint images, subsets (triplets) of the feature points for a given fingerprint image are generated in a deterministic fashion. One or more of the subsets (triplets) of feature points for the given fingerprint image is selected. For each selected subset (triplet), data is generated that characterizes the fingerprint geometry in the vicinity of the selected subset (triplet). The data corresponding to the selected subset (triplet) is used to form a key (or index). The key is used to store and retrieve entries from a multi-map, which is a form of associative memory which permits more than one entry stored in the memory to be associated with the same key. An entry is generated that preferably includes an identifier that identifies the fingerprint image which generated this key and information (or pointers to such information) concerning the subset (triplet) of feature points which generated this key. The entry labeled by this key is then stored in the multi-map.

In some preferred recognition modes, a query (triangular representation) fingerprint image is supplied to the system. Similar to the acquisition mode, subsets (triplets, e.g., A, B, and C) of feature points of the query fingerprint image are generated in a preferably, consistent (e.g., similar) fashion. One or more of the subsets (triplets) of the feature points of the query fingerprint image is selected. For each selected subset (triplet), data is generated that characterizes the query fingerprint in the vicinity of the selected subset (triplet). The data corresponding to the selected subset is used to form a key. All entries in the multi-map that are associated with this key are retrieved. As described above, the entries include an identifier that identifies the referenced fingerprint image. For each item retrieved, a hypothesized match between the query fingerprint image and the reference fingerprint image is constructed. This hypothesized match is labeled by the identifier of the reference fingerprint image and optionally, parameters of the coordinate transformation which bring the subset (triplet) of features in the query fingerprint image into closest correspondence with the subset (triplet) of features in the reference fingerprint image. Hypothesized matches are accumulated in a vote table. The vote table is an associative memory keyed by the reference fingerprint image identifier and the transformation parameters (if used). The vote table stores a score associated with the corresponding reference fingerprint image identifier and transformation parameters (if used). When a newly retrieved item generates a hypothesis that already exists in the associative memory, the score corresponding to the retrieved item is updated, for example by incrementing the score by one. Finally, all the hypotheses stored in the vote table are sorted by their scores. This list of hypotheses and scores is preferably used to determine whether a match to the query fingerprint image is stored by the system. Alternatively, this list of hypotheses and scores may be used as an input to another mechanism for matching the query fingerprint image. Thus, for example, in one illustrative embodiment of the present invention, a similarity between an enrolled image and the query image is ascertained by a number of indices common in the query template and an enrollment template respectively corresponding thereto. In another illustrative embodiment of the present invention, a similarity between an enrolled image and a query image is ascertained by a number of selected geometric shapes that index to common indices in the query template and an enrollment template respectively corresponding thereto. In yet another embodiment of the present invention, a similarity between an enrolled image and a query image is ascertained by pairs of selected enrolled and query geometric shapes that index to common indices in the query template and an enrollment template respectively corresponding thereto and that are related to each other by a common similarity transform. Similarity may be determined based on, but not limited to, the following: a hamming distance, a vector comparison, a closeness algorithm, a straight number to number comparison. It is to be appreciated that the preceding approaches for determining similarity between an enrolled image and a query image are merely illustrative and, given the teachings of the present invention provided herein, one of ordinary skill in the related art will contemplate these and various other approaches for determining similarity between an enrolled image and a query image while maintaining the spirit of the present invention.

The feature points of a fingerprint image are preferably extracted from a gray scale image of the fingerprint acquired by digitizing an inked card, by direct live-scanning of a finger using frustrated total internal reflection imaging, by 3-dimensional range-finding techniques, or by other technologies.

The feature points of a fingerprint image are preferably determined from singularities in the ridge pattern of the fingerprint. As shown in FIG. 4, a ridge pattern includes singularities such as ridge endings and ridge bifurcation. Point A is an example of a ridge bifurcation. Points B and C are examples of ridge endings.

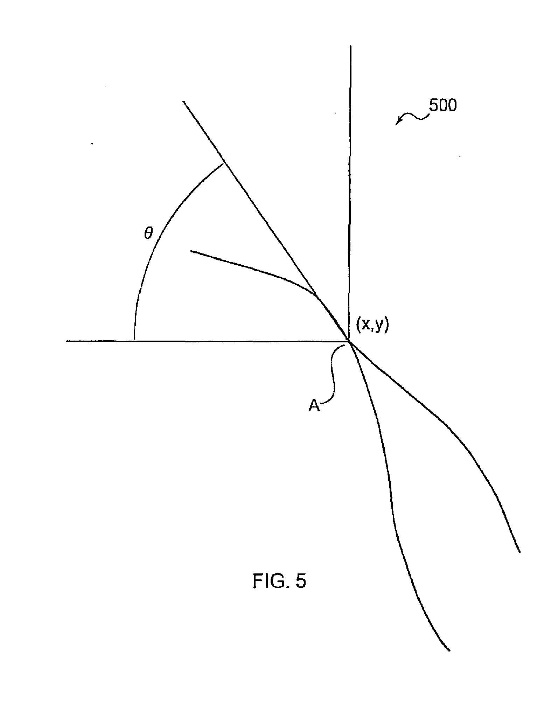

FIG. 5 is a diagram that pictorially represents geometric features 500 that characterize the feature points of FIG. 4. As shown in FIG. 5, each local feature is preferably characterized by the coordinates (x,y) of the local feature in a reference frame common to all of the local features in the given fingerprint image.

Geometric features to which the present invention may be applied or may employ include, but are not limited to, a line length, a side length, a side direction, a line crossing, a line crossing count, a statistic, an image, an angle, a vertex angle, an outside angle, an area bounded by the at least one geometric shape, a portion of the area bounded by the at least one geometric shape, an eccentricity of the at least one geometric shape, an Euler number of the at least one geometric shape, compactness of the at least one geometric shape, a slope density function of the at least one geometric shape, a signature of the at least one geometric shape, a structural description of the at least one geometric shape, a concavity of the at least one geometric shape, a convex shape enclosing the at least one geometric shape, a shape number describing the at least one geometric shape.

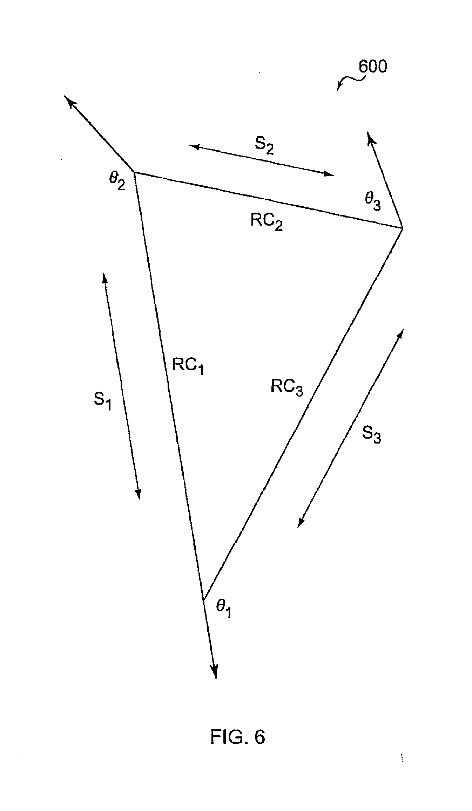

In the acquisition mode and recognition mode described in detail below, subsets (triplets) of feature points (e.g., minutiae) of a given fingerprint image are selected and, for each selected subset (triplet), data is generated that characterizes the fingerprint image in the vicinity of the selected subset of feature points. Preferably, such data includes geometric data like a distance S associated with each pair of feature points that make up the selected subset, and a local direction (h) of the ridge at coordinates (x,y) of each feature point in the selected subset. More specifically, the distance S associated with a given pair of feature points preferably represents the distance of a line drawn between the corresponding feature points. In addition, the local direction (h) associated with a given feature point preferably represents the direction of the ridge at the given feature point with respect to a line drawn from the given feature point to another feature point in the selected subset. For example, for the triplet of feature points A,B,C illustrated in FIGs. 4 and 5, the data characterizing the fingerprint image in the vicinity of the triplet A, B,C would include the parameters $(S_1, S_2, S_3, h_1, h_2, h_3)$ as shown in FIG. 6. FIG. 6 is a diagram pictorially representing geometric features 600 that characterize the feature points of FIG. 4, according to an illustrative embodiment of the present invention.

In addition, the data characterizing the fingerprint image in the vicinity of the selected subset of feature points preferably includes a ridge count associated with the pairs of feature points that make up the selected subset. More specifically, the ridge count RC associated with a given pair of feature points preferably represents the number of ridges crossed by a line drawn between the corresponding feature points. For example, for the triplet of feature points A, B, C illustrated in FIG. 6, the data characterizing the fingerprint image in the vicinity of the triplet A,B,C would additionally include the ridge count parameters $(RC_{AB}, RC_{AC}, RC_{BC})$, where $RC_{AB}$ represents the number of ridges crossed by a line drawn between feature points A and B, where $RC_{AC}$ represents the number of ridges crossed by a line drawn between feature points A and C, and where $RC_{BC}$ represents the number of ridges crossed by a line drawn between feature points B and C, respectively denoted in FIG. 6 as $RC_1$, $RC_2$ and $RC_3$.

There are many different implementations for extracting invariant features and the associated data, all of which may be used by the present invention. For example, the feature points and associated data may be extracted automatically by image processing techniques as described in "Advances in Fingerprint Technology", Edited by Lee et al., CRC Press, Ann Arbor, Mich., Ratha et al., "Adaptive Flow Orientation Based Texture Extraction in Fingerprint Images", Journal of Pattern Recognition, Vol. 28, No. 11, pp. 1657-1672, November, 1995.

In particular, fingerprint invariant feature extraction techniques that may be used are described in the following United States Patents, and which are incorporated by reference herein in their entireties: United States Patent No. 6,072,895, entitled "System and Method Using Minutiae Pruning for Fingerprint Image Processing", issued on June 6, 2000; and United States Patent No. 6,266,433, entitled "System and Method for Determining Ridge Counts in Fingerprint Image Processing", issued July 24, 2001.

A typical "dab" impression will have approximately forty feature points which are recognized by the feature extraction software, but the number of feature points can vary from zero to over one hundred depending on the morphology of the finger and imaging conditions.

A more detailed description of the derivation of feature points and associated data, the acquisition mode, and the recognition mode wherein the structure to represent the database is a hash table are described United States Patent No. 6,041,133, entitled "Method and Apparatus for Fingerprint Matching Using Transformation Parameter Clustering Based on Local Feature Correspondences", issued on March 21, 2000, and incorporated by reference herein in its entirety.

According to one embodiment of the present invention, triangles (and in general polygons) can be utilized to represent fingerprints (or other images). Moreover, the present invention provides methods to develop machine representations of polygons (especially triangles) of (fingerprint) image data. These representations are invariant to a certain amount of fingerprint image noise and fingerprint image distortions from print to print and there exists a finite, countable number of those triangles/polygons. In addition to the geometric information related to the point features (e.g., side of the triangle), the prior art uses image information in the immediate spatial neighborhood of the image point features (e.g., direction of ridge near minutiae) or the narrow linear strip of image in the neighborhood of the line joining point features (e.g., ridge count between minutiae, length). These types of information are collectively referred to herein as geometric features. Not only is invariant geometric information about the triangles/polygons used, but as a novel aspect, invariant features of the photometric data obtained from the image region near (preferably inside) the triangles/polygons itself is used. That is, the fingerprint representation is hybrid in that both geometric data and fingerprint image (e.g., photometric) data is used. It is to be noted that "photometric" data as described herein includes sensed image measurement including, but not limited to, depth, reflectance, dielectric properties, sonar properties, humidity measurements, magnetic properties, and so forth. It is to be further noted that photometric data as referred to herein refers to image information corresponding to a *region* associated with the polygons (e.g., triangles) constituting image point features.

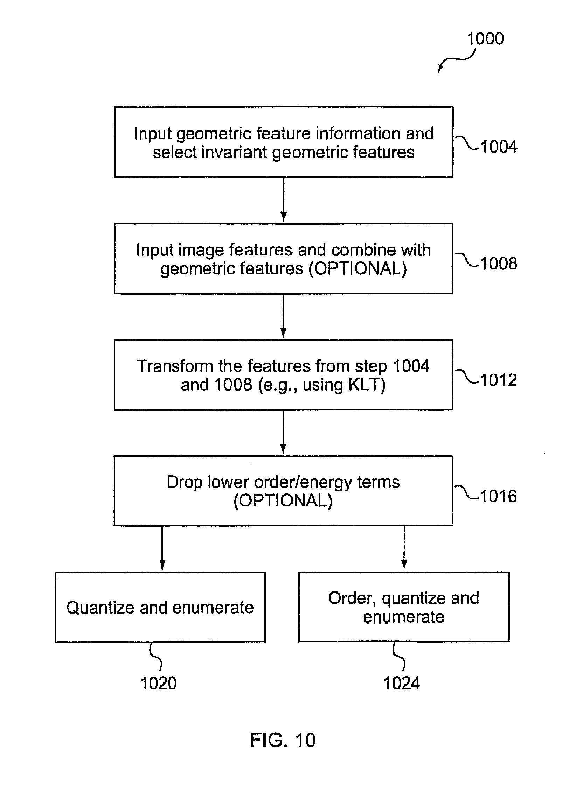

FIG. 10 is a flowchart of a preferred encoding process 1000 showing the steps of converting one or more image features into a single representation, e.g., a number or more generally, a vector of numbers. The image features can be enumerated based on preferably three minutiae, the number/vector is bounded and therefore by quantization all possible triangles can be enumerated. The encoding process 1000 takes input feature information from a triangular image surrounding the fingerprint area of a combination of three minutiae as in FIG. 4 and constructs an enumeration of the triangles (polygons).

Step 1004 inputs geometric features of a triplet of minutiae (in this embodiment). That is, a triplet is a combination of three minutiae that are selected from the set of minutiae as computed from a fingerprint image. In this embodiment, these features are associated with the geometric ridge structure inside and surrounding the polygon/triangle such as the ones shown in FIG. 6. The features include angles lengths, ridge counts, as outlined in the above-referenced United States Patent Nos. 6,072,895 and 6,266,433. The features are represented in a vector $X_1 = (S_1, S_2, S_3, h_1, h_2, h_3, RC_1, RC_2, RC_3)$, where S represent distances and h represent angles as in FIG. 6. The $RC_1$, $RC_2$, $RC_3$ and the number of ridges traversing the sides of lengths $S_1, S_2, S_3$, respectively (see FIG. 6). Note that in this example, the sides "$S_1, S_2, S_3$" and the angles "$h_1, h_2, h_3$" are invariant geometric minutiae data. The ridge counts "$RC_1, RC_2, RC_3$" are also invariant geometric data (for the purposes of the present invention) because they are extracted in very narrow strips of images associated with a geometric entity, e.g., a side of a triangle, and because they are not associated with substantial image regions.

It is to be appreciated that any other geometric features computed from the geometric shape may also be utilized with respect to the present invention including, but not limited to, eccentricity of the geometric shape, an Euler number of the geometric shape, compactness of the geometric shape, slope density function of the geometric shape, a signature of the geometric shape, a structural description of the geometric shape, a concavity of the geometric shape, a convex shape enclosing the geometric shape, a shape number describing the geometric shape. The computation of these shape geometric features is taught in the following reference, the disclosure of which is incorporated by reference herein in its entirety: Computer Vision, Ballard et al., Prentice Hall, New Jersey. pages 254-259.

Step 1004 further selects geometric features of the triangle that are invariant to rotation and translation (i.e., rigid transformations) of the triangle in image or two-space. In addition, very specific invariant fingerprint features ($RC_1$, $RC_2$, $RC_3$) are included. Alternatively, step 1004 selects geometric features of the triangle that are invariant to rotation, translation, and scaling (i.e., similarity transformations) of the triangle in two-space.

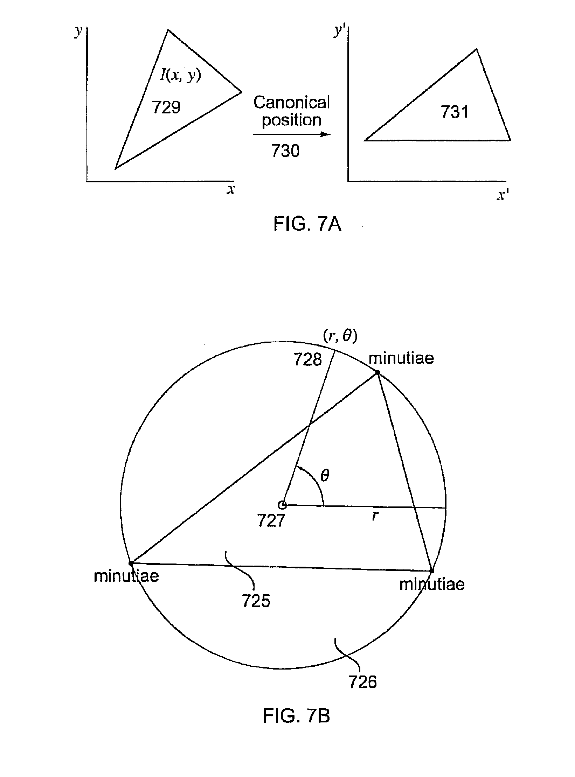

Optional step 1008 inputs invariant photometric features as computed from the fingerprint gray-scale image region. These features are associated with the fingerprint image profile around the triangle/polygon within a region, preferably within the polygons/triangles, such as the ones of FIG. 6 and more preferably within a circular image (e.g., 726 in FIG. 7B) circumscribed by the triangle. FIG. 7B is a diagram illustrating the extracting of photometric invariants according to a preferred embodiment of the present invention. FIG. 7B is described in further detail herein below. It is to be appreciated that the present invention is not limited to the preceding approach (e.g., circular image region 726 of FIG. 7B) of selecting a region for extracting photometric features and, thus, other approaches may also be employed in accordance with the present invention. For example, the triangular (polygonal) region itself can be selected for extracting photometric features. A surround operator of region A defines a larger region B such that any point within region B is within a certain maximum distance t from the nearest point on the periphery of A. It is possible to select a region surrounding either triangle 725 or circle 726 shown in FIG. 7B. Similarly, A shrink operator of region A defines a smaller region B such that any point within region B is within a certain maximum distance t from the nearest point on the periphery of A. It is possible to select a region shrinking either triangle 725 or circle 726. It is possible to select one or more subregions of the circle 726 or triangle 725 for photometric feature extraction. A number of photometric features can computed from the selected image region.

By a way of illustration, photometric features may include, but are not limited to, the following: an intensity, a pixel intensity, a normal vector, a color, an intensity variation, an orientation of ridges, a variation of image data, a statistic of at least one region of the image, a transform of the at least one region of the image, a transform of at least one subregion of the image, a statistic of the statistic or transform of the two or more subregions of the image. The statistic may include, but is not limited to, the following: mean, variance, histogram, moment, correlogram, and pixel value density function. Photometric features also include transform features of the image region such as Gabor transform, Fourier Transform, Discrete Cosine Transform, Hadamard Transform, Wavelet Transform of the image region. Further, if the given image region is partitioned into two or more image subregions and means or variances of each such region can constitute the photometric features. When more than one photometric feature is computed by partitioning a given image region into two or more subregions, a statistic of such photometric features is also a photometric feature. Similarly, when more than one photometric feature is computed by partitioning a given image region into two or more subregions, a spatial gradient of such photometric features is also a photometric feature. The ways of computing different photometric features, ways of decomposing a region into subregions, ways of computing statistics and transforms of the image regions, and combining and composing more image photometric features from already computed photometric features are well known to those of ordinary skill in the related art and such methods are intended to be encompassed within the scope of the present invention. The following reference relating to image retrieval and image features is incorporated by reference herein in its entirety: Image Retrieval: Current Techniques, Promising Directions And Open Issues, Rui et al., Journal of Visual Communication and Image Representation, Vol. 10, No. 4, pp. 39-62, April 1999.

Example photometric features include, but are not limited to, statistics such as mean, variance, gradient, mean gradient, variance gradient, etc., of preferably, the circular image region 726 shown in FIG. 7B. These features also include, but are not limited to, the decomposition of triangular image data into basis functions by transforming vectors of image data. Such decompostions include, but are not limited to, the Karhunen-Loeve Transform, and other decorrelating transforms like the Fourier transform, the Walsh-Hadamard transform, and so forth. The output of such a transform is a vector $X_2 = (a_1, a_2, a_3...)$ of invariant photometric statistics. Hence, optional step 1008 selects invariant photometric features---invariant features of the fingerprint image profile $I(x, y)$ associated with the triangle, which is further described in Figure 7A. FIG. 7A is a diagram illustrating the extracting of photometric invariants according to another embodiment of the present invention. FIG. 7A is described in further detail herein below. The present invention uses processes for extracting photometric features for reliable indexing and accurate matching of visual patterns/objects.

The photometric features are extracted and selected using of feature selection. For example, feature selection is described in the following reference, the disclosure of which is incorporated by reference herein in its entirety: Pattern Classification (2nd Edition), Duda et al., Wiley-Interscience, 2000.

For example, a large number of known photometric features extracted from a representative fingerprint image data set (also called training data) and one or more of these features are selected that result in best matching performance for the training data with known ground truth (i.e., which pairs of fingerprints should match is known *a priori*).

Step 1012 encodes/transforms the features from steps 1004 and 1008. Two exemplary approaches to performing step 1012 are described herein. However, it is to be appreciated that other approaches may also be employed in accordance with the present invention.

In the first approach, vectors $X_1$ and $X_2$ are concatenated $X = (S_1, S_2, S_3, h_1, h_2, h_3, RC_1, RC_2, RC_3, a_1, a_2, a_3, ...)$ and a vector Y is constructed as follows:

$$Y = K X,$$

with $Y = (y_1, y_2, y_3, ...)$. See below for a description of K.

In the second approach, two separate vectors $Y_1$ and $Y_2$ are constructed as follows:

$$Y_1 = K_1 X_1 \quad and \quad Y_2 = K_2 X_2,$$

where, preferably, $K_2 = I$ (the identity matrix) and $Y_2 = X_2$.

Step 1012 preferably is achieved using the first approach. In a preferred embodiment, the transform K combines the geometric invariants and the photometric invariants of the triangles/polygons in a novel fashion. The method of KLT transform K is known to those of ordinary skill in the related art and is described, e.g., in the following pattern recognition reference, the disclosure of which is incorporated by reference herein in its entirety: Pattern Classification (2nd Edition), Duda et al., Wiley-Interscience, 2000.

KLT transform uses the training data of fingerprints and their features (X mentioned above) and simulates a transform K that transforms X into a set orthogonal vectors Y resulting in uncorrelated components $y_1$, $y_2$, $y_3$. These components $y_1$, $y_2$, $y_3$, ... are also invariant to rotation, translations, (& scaling) of the triangles. The elements $y_1$, $y_2$, $y_3$, ... of training data Y are uncorrelated and if the training data describes (predicts) the user population well, the random variables $y_1$, $y_2$, $y_3$, ... will be uncorrelated.

Let us proceed with this vector X. For a given triangular/polygonal area of fingerprint image data, the vector X represents all the invariant (finger) properties that can be extracted from a region inside (shrink) or surrounding the triangle/circle. In the physical sense, by invariant properties we mean those properties of an image, preferably a fingerprint, or more preferably, those properties of an individual finger that, when scanned from paper impressions, live-scan, and so forth, remain invariant from one impression to the next. Note that because of the peculiar imaging process, these invariants may have to be coarsely quantized. Loosely invariant properties such as "the triangle lies in upper-left quadrant," which is a binary random variable may be included as components of the vector X. Mathematically, this means that these properties are invariant to rigid transformations or similarity transformations.

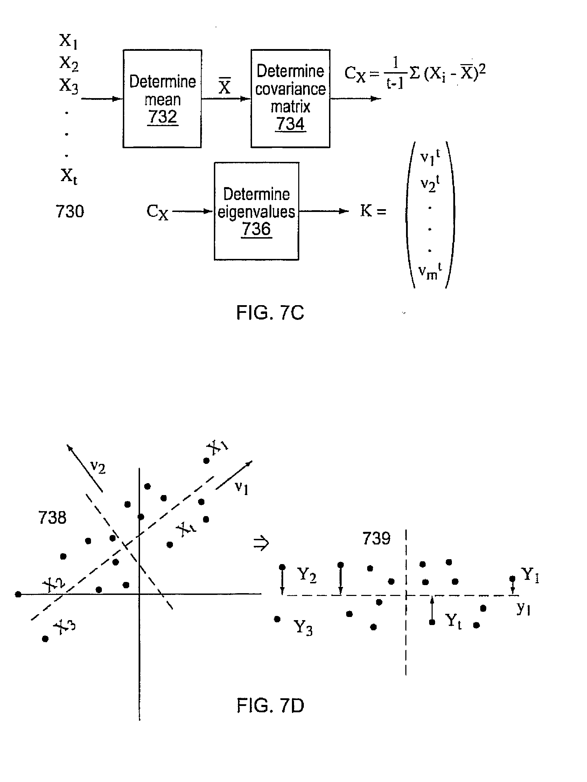

As described in FIGs. 7C and 7D, a preferred way of implementing step 1012 is to map vector X into a new coordinate system spanned by the eigenvectors of the covariance matrix of the training data. The matrix K is obtained by estimating the covariance matrix $C_x$ of training images (which give a set of training triangles) and determining the eigenvectors $v_1$, $v_2$, $v_3$, ..., $v_n$, where n is the number of components of X. Physically, this means that a new Y coordinate system is erected in space X. While the invariant features X essentially can be distributed any way 738 in this space, in Y space the first axis corresponding to $y_1$ is pointing along the direction of highest variance, the $y_2$ is perpendicular to $y_1$ and in the direction of second highest variance (as 739), $y_3$ is in the direction of third highest variance and perpendicular to $y_1$ and $y_2$. Again, this process is described in FIGs. 7C and 7D.

If K is estimated from fingerprint training data triangles that are representative of the type of triangles found in the user population, the components Y = ($y_1$, $y_2$, $y_3$, ..., $y_n$) are independent (or at least uncorrelated). Moreover, the energy or variance that is present in the vector X as a set of random variables, is now concentrated in the lower order components of vector Y. Optional step 1016 takes advantage of this by only selecting the first m =< n components Y' = ($y_1$, $y_2$, $y_3$, ..., $y_m$). This vector Y' or this set of numbers is a unique representation of fingerprint image data in and around the triangle formed by a combination of three (or more) minutiae as further depicted in FIGs. 7C and 7D. The y components are ordered from maximum to minimum variance and then only the components with highest variance are selected.

As noted above, FIG. 7A describes a novel preferred way of extracting invariant photometric features. Given some triangle 729 in the original *xy* fingerprint image coordinate system, a first step is to transform 730 the triangle 729 to a canonical position 731 in an *x'y'* image coordinate system. There are many known ways such a transform can be determined. What is needed is that a triangle 729 in any position will always be transformed to a triangle as 731 (invariance). The latter orientation being independent of the original orientation of triangle 729. Selecting an invariant feature of the triangle that can be robustly extracted, and rotating and translating (and scaling) this feature into canonical position is the preferred method.

In accordance with the principles of the present invention, a preferred way to extract invariant image features from the triangles is shown in the bottom part of FIG. 7B. Given triangle 725, the intent is to extract invariant features (geometric and photometric) from *I(x, y)* in a (circular) region 726 of the fingerprint image. The circle center 727 is the center of gravity of the three minutia that form the triangle. In the preferred embodiment where triangles are used, the circle can be defined by the location of the 3 vertices of the triangle. The image function *I(x, y)* can now be described as *I*(r, h) with r (the radial coordinate) and h (the angular coordinate 728) defined by the circle. For a circular image of specific radius *I*(r, h), a set of circular "eigen-images" can be determined through the KLT. These are a set of circular basis image functions $e_1$, $e_2$, $e_3$, ... that form the basic building blocks that best describe the photometric feature (in a preferred embodiment, the image intensity patterns that are found in fingerprint images) within a region, e.g., the circle. The image is *I*(r, h) = $a_1 e_1 + a_2 e_2 + a_3 e_3 + ...$ which is truncated at some point m. The $a_1$, $a_2$, $a_3$ are novel invariant descriptors of the circular image that express the ridge "texture" within the circular image in an invariant (to rotation & translation) way.

FIG. 7C describes one preferred way of the training of this encoding scheme, the Karhunen-Loeve transform (KLT). That is, FIG. 7C describes what is involved in obtaining matrix K. As prescribed by the KLT, a training set is needed, the set of input vectors is {$X_1$, $X_2$, $X_3$, ..., $X_t$}, each $X_i$ representing n invariant properties (geometric and/or photometric invariant properties) of a training triangle of a triangular area of fingerprint image data determined by a combination (preferably 3) of minutiae. Hence, from this set of input vectors 730, the covariance matrix is determined by determining the vector mean (step 732) and then determining the covariance matrix $C_x$ (step 734). The eigenvectors $v_1$, $v_2$, $v_3$, ..., $v_n$ of $C_x$ determined at step 736 give the transformation matrix K. The eigenvalues $k_1$, $k_2$, $k_3$, ..., $k_n$ of $C_x$ give the variance of the components $y_1$, $y_2$, $y_3$, ..., $y_n$, respectively, the eigenvalues can guide in the truncation m of step 736.

FIG. 7D merely gives an example of what the KLT would do when trained on a set 738 of vectors {$X_1$, $X_2$, $X_3$, ..., $X_t$}. Here, the X vectors are two-dimensional ($x_1$, $x_2$) so that they can be visualized in two-space, which means that only

two invariants $x_1$ and $x_2$ are extracted from each of the t training triangles, i.e., triangle sides, angles, invariant photometric properties, and so forth. The covariance matrix of the $X_i$ has eigenvectors $v_1$, $v_2$ as seen from set 738. The matrix K then is constructed as in step 736 of FIG. 7C by putting the two eigenvectors as rows of transformation matrix K. Transforming the set 738 results in set $\{Y_1, Y_2, Y_3, ..., Y_t\}$ of 739. The components $y_1$ and $y_2$ of Y are uncorrelated, furthermore, the variance of the set 739 along the x-axis is $k_1$ and the variance along the y-axis $k_2$; $k_1$ and $k_2$ represent the eigenvalues of the covariance matrix.

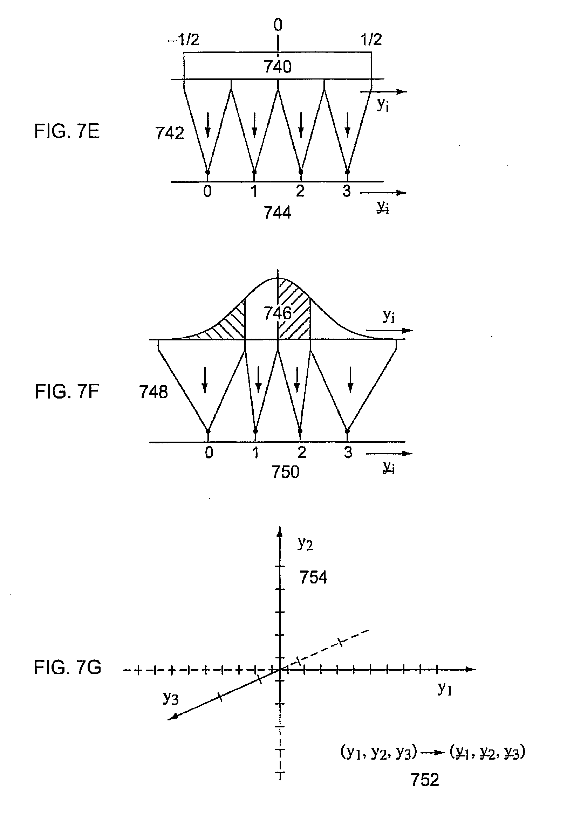

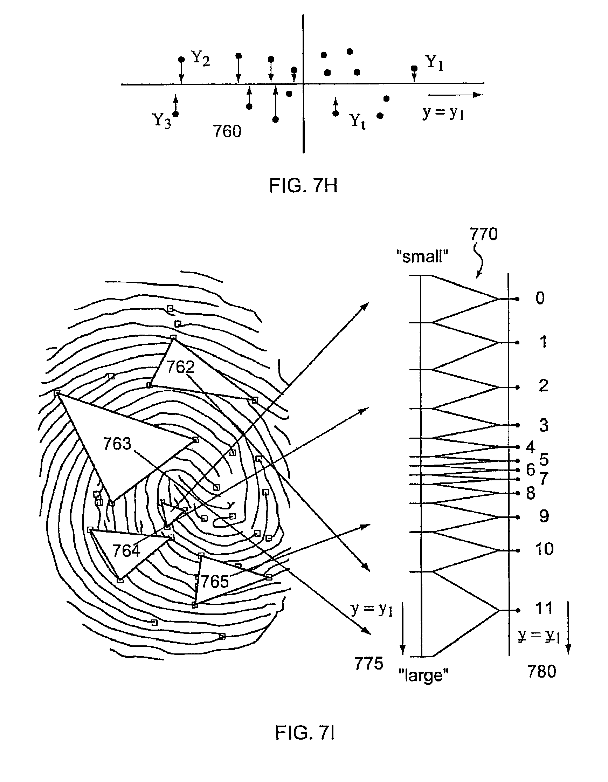

As a last step, either the elements of Y' are quantized and enumerated at step 1020, or the triangles are ordered and quantized 1024. FIGs. 7E through 7G further illustrate step 1020 of FIG. 10, and FIGs. 7H and 7I further illustrate step 1024 of FIG. 10. FIG. 7D describes in detail step 1020 ("quantize and enumerate") of FIG. 10. Each of the transformed components $Y_i = (y_{i1}, y_{i2}, y_{i3}, ..., y_{im})^T$ is a random variable associated with a triangle of fingerprint image data. These components are independently encoded and a vector is obtained as follows:

$$\underline{Y}_i = (\underline{y}_{i1}, \underline{y}_{i2}, \underline{y}_{i3}, ..., \underline{y}_{im})^T$$

Each of the m components is independently quantized through some process $Y \to \underline{Y}$. First in FIGs. 7E and 7F, just one component $\underline{y}_i$ of $\underline{Y}$ is looked at, having t samples, one for each of the t training samples from FIG. 7C $\{X_1, X_2, X_3, ..., X_t\}$. An empirical distribution of each of the components can be obtained, and from the t samples, a quantization strategy of each component can be designed accordingly. Concentrating on one component, e.g., $Y = (y_i)^T = y_i$, FIG. 7E and 7F describe two cases, respectively: (i) the distribution of $y_i$ is uniform (740-744, FIG. 7E); (ii) the distribution of $y_i$ is Gaussian (746-750, FIG. 7F). The quantization is novel based on empirical distributions of the training data described in detail herein below for the uniform and the Gaussian distribution.

FIG. 7E illustrates the uniform distribution of $y_1$ of 740. The precision with which this component can be sampled greatly depends on the distribution of each component. In the case of 740 the dynamic range of $y_i$ is small [-1/2,1/2]. By quantizing into two bits as through the transformation 742, the resulting discrete random variable $\underline{y}_i$ takes on values {0, 1, 2, 3}. More precisely, encoding 742 prescribes the following:

if $y_i$ in [-1/2,-1/4] then $\underline{y}_i = 0$
if $y_i$ in (-1/4,0] then $\underline{y}_i = 1$
if $y_i$ in (0,1/4] then $\underline{y}_i = 2$
if $y_i$ in [-1/4, 1/2] then $\underline{y}_i = 3$

The prior probability for each value {0, 1, 2, 3} is equal to ¼ (744).

FIG. 7F illustrates the Gaussian distribution of $y_i$ of 746. Again, the precision with which this component can be sampled greatly depends on the distribution of this component which is Gaussian in this case. The dynamic range and variance of $y_i$ is in this case again in the same range as 740, small [-1/2,1/2]. By quantizing into two bits as through the transformation 748 the resulting discrete random variable $\underline{y}_1$ takes on values {0, 1, 2, 3}. The mapping is constructed by dividing the $y_i$ axis into four intervals. This is achieved by making the integral under the Gaussian curve 746 equal to ¼ for each of these intervals. The prior probability is equal to ¼ for each value of $\underline{y}_i$ (750). In sum, this allows for combining geometric and photometric invariant information in a novel manner; it allows for systematic construction of encoding matrices based on training data; it describes the invariant information in the triangles as a sequence $\underline{y}_{i1}, \underline{y}_{i2}, \underline{y}_{i3}, ..., \underline{y}_{im}$ of discrete random variables with the components of Y ordered according to variance, from high to low.

The coordinate system 754 of FIG. 7G indicates the extension of just one component $y_i$, to a three-dimensional vector $Y = (y_1, y_2, y_3)^T$ with samples $Y_i = (y_{i1}, y_{i2}, y_{i3})^T$ ; i = 1, ..., t. (See FIG. 7D.) For each of the three components, different quantizing schemes can be obtained from the empirical distributions of the individual samples $y_{i1}, y_{i2}, y_{i3}$ ; i = 1,..., t as shown by the quantized axes of a coordinate system 754 embedded in Y space. The first component $y_1$ is finely sampled; the second component $y_2$ is sampled coarser; the third component $y_3$ is sampled even coarser. Given that the $\underline{y}_1, \underline{y}_2, \underline{y}_3$ are all finite and bounded, the vector Y is quantized in a bounded area of the array $A(\underline{y}_1, \underline{y}_2, \underline{y}_3)$, i.e., the mapping 752

$$Y = (y_1, y_2, y_3)^T \rightarrow \underline{Y} = (\underline{y}_1, \underline{y}_2, \underline{y}_3)^T$$

takes on only a finite number of values. If the estimates of empirical distribution estimates are accurate and there are N different triangles obtained by sampling the $(\underline{y}_1, \underline{y}_2, \underline{y}_3)$ space, the prior probabilities equal 1/N.

Generally, with a mapping of X to lower dimensional Y space of m dimensions $Y = (y_1, y_2, ..., y_m)^T$ (m is optionally smaller than n; if the components of X are independent, m = n) where the mapping is constructed as indicated above, the different components can be quantized in $N_1$, $N_2$, ..., $N_m$ levels. The prior probability then for each of the different triangles is as follows:

$$1/\ (N_1\ .\ N_2\ .\ ...\ .\ N_m)\ \ =\ 1/N$$

So the component values can be enumerated and therefore the number of possible triangles/polygons that can be distinguished in a fingerprint image can be determined from a set of training data. Hence, a machine representation can be constructed that describes a fingerprint as a set of unique triangles/polygons.

Next, rather than representing a triangle by a vector Y, a preferred embodiment represents a triangle by a single, scalar number, which allows the ordering, quantizing, and enumerating of step 1024 in FIG. 10. Turning our attention to FIG. 7D the points $\{X_1, X_2,..., X_t\}$ of 738 and, hence, the points $\{Y_1, Y_2,..., Y_t\}$ of 739 can be ordered or sorted in another way. That is, by projecting the points X onto the first eigenvector $v_1$ of the covariance matrix $C_x$, the scalar value $y = y_1 = X . v_1$ (the dot product of X and $v_1$) gives a number that is uniquely associated with the particular invariant X of the triangle.

The physical description of this is shown on the right-hand side of FIG. 7D. The elements X are projected onto a line that intersects the cluster along the direction of maximum variance. In FIG. 7D, the individual samples are projected onto the line spanned by the center of gravity of $\{Y_1, Y_2, ..., Y_t\}$ and the vector $v_1$, the first eigen vector of $C_x$. The ordering obtained in FIG. 7D is determined by the value $y_1$ and is $(Y_3, Y_2, ..., Y_t, ..., Y_1)$.

FIGs. 7H and 7I describes this many-to-one mapping in more detail. By setting $y = y_1$, the first component of Y, each triangle is projected onto the axis spanned by $v_1$, as is shown by the projection arrows of 760. When training such a mapping with a data set $\{X_1, X_2, X_3, ..., X_t\}$, again an empirical distribution of the random variable y can be established. This gives a number of y values (775) that range from "small" to "large." In turn, this y value can be quantized by construction 770 using the empirical distribution of the t estimates of y. This is achieved by dividing the range of y into N intervals such that the area under the empirical distribution for each interval is 1/N. The result then is a novel direct mapping, quantization $\underline{y}$ into a finite number of triangles labeled k, k = 1, ..., N (that is, $\underline{y}(1) ... \underline{y}(N)$ as 780) with N representing the number of distinct triangles or quantization levels. In 780, $\underline{y}$ can take on values {0, 1, 2, ..., 11}.

This is the mapping from an n-dimensional space to a 1-dimensional space as prescribed by the statistical KLT. There are other ways such a mapping (after quantization) of the components of $\underline{Y} = (\underline{y}_1, \underline{y}_2, \underline{y}_3, ..., \underline{y}_m)^T$ to a scalar value are envisioned and which may be employed in accordance with the present invention.

A preferred method here is to construct a scalar value by rearranging the bits of the $\underline{y}_1, \underline{y}_2, \underline{y}_3, ..., \underline{y}_m$. A new bit string $\underline{y}$ can be constructed as follows:

$$\underline{y}\ =\ \ 1(\underline{y}_1)\,1(\underline{y}_2)\,...\,1(\underline{y}_m)\,2(\underline{y}_1)\,2(\underline{y}_2)\,...\,2(\underline{y}_{m-1})\,.......\,m(\underline{y}_1)\,....$$

where the functions 1(y) 2(y) ..... m(y) are the 1st, 2nd, ...., m-th bit of the quantized number y. This forms again a many-to-one mapping from the Y to the to the discrete numbers {0,1,2, ..., N}. Other ways of mapping the bits of the m numbers into a single number are within the scope of the present invention.

Each individual fingerprint then is a real-world set of triangles/polygons and a fingerprint representation is a set of triangles. A machine representation of a fingerprint is a subset $\{t_j\}$ of the possible N triangles. This machine representation is, of course, as good as the triangles and their invariant properties can be extracted. The machine representation can be refined by adding additional fingerprints (hence, triangles). As in any stochastic measuring system, though, there will be spurious triangles, missing triangles, and triangles that are too distorted and therefore poorly estimated statistical invariants of the triangles. The representation of a fingerprint by triangles offers a certain amount of privacy because if the encoding scheme is unknown it is unknown what the different triangles are. However, if someone skilled in the art would obtain the encoding scheme in such machine fingerprint representation, by computationally laying out the triangles such that as many as possible fit together by coinciding the vertices, that is, the minutiae, the fingerprint can be decoded. To further encode or encrypt the fingerprint, during enrollment the triangles can be transformed. This makes decoding the original fingerprint a computational impossibility.

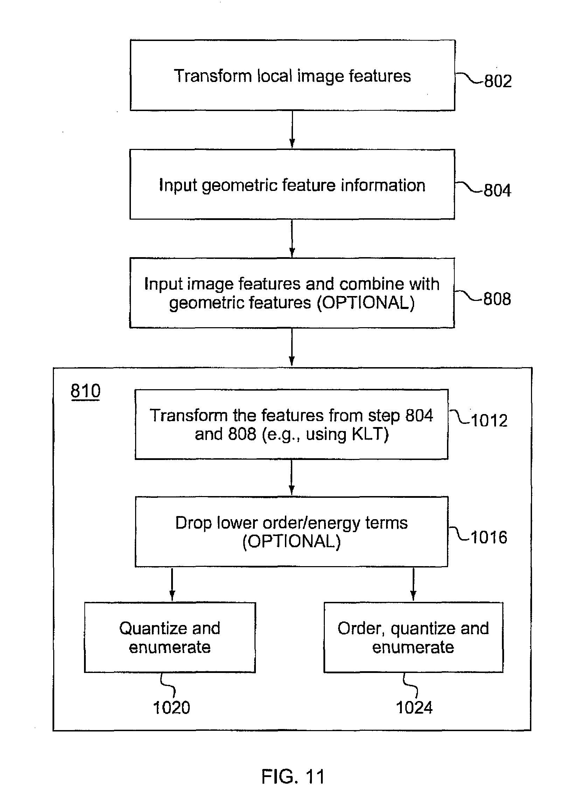

FIG. 11 is a flowchart of a preferred conversion and encryption process showing the steps of encoding one or more image features associated with a triangle/polygon into one unique number from a finite set of numbers or one unique vector from a finite set of vectors. This process thereby makes the triangles from which fingerprint images can be constructed enumerable. However, in this case before encoding the triangles into a vector as in FIGs. 7D through 7G or into a scalar as in FIGs. 7H and 7I, the image data is transformed by local image transform 802.

Referring to FIG. 11, the first step 802 of the encoding process converts each triangle of fingerprint image data into another triangle of image data. Hence, the input to step 804 is transformed invariant geometric and photometric features extracted from regions around triplets of minutiae. Here, a triplet is a combination of three minutiae that are selected from the set of minutiae as computed from a fingerprint image. These features are associated with the triangle itself and with the geometric ridge structure inside and surrounding the polygon/triangle such as the ones of FIG. 6. Using these associations, invariant properties of the transformed triangle plus invariant properties of the ridge structure surrounding the transformed triangle are extracted. These features include angles, distances, ridge counts, for instance, as outlined in the above referenced United States Patents, namely United States Patent Nos. 6,072,895 and 6,266,433, and in general is a vector

$$X = (S_1, S_2, S_3, h_1, h_2, h_3, RC_1, RC_2, RC_3, a_1, a_2, a_3, \ldots),$$

where $S_1$, $S_2$, $S_3$, represent rigid-body geometric invariants (lengths), $h_1$, $h_2$, $h_3$ represent invariant angles, $RC_1$, $RC_2$, $RC_3$ ridge counts, and the $a_1$, $a_2$, $a_3$ represent photometric invariants.

Step 808, which involves the extraction of photometric invariants, is an optional step. The input to process 808 is transformed triangular image regions and surroundings of image data. The image data is converted by the same prescribed encoding as the geometric data. Invariant photometric features are associated with the transformed fingerprint gray-scale image data within and surrounding, e.g., a circle, polygons/triangles. These features include statistics such as mean, variance, gradient, mean gradient, variance gradient, and so forth. The features also include statistical estimates of image quality. These features further include the decomposition of transformed triangular image data into basis functions by transforming vectors of image data within the triangles, thereby describing the photometric profile of the fingerprint surrounding the triplet in terms of a small number of invariance $a_1$, $a_2$, $a_3$,.... Such decompostions include the Karhunen-Loeve Transform, and other decorrelating transforms like the Fourier transform, the Walsh-Hadamar transform, and so forth. The output of such an encoding is a vector $X_2 = (a_1, a_2, a_3, \ldots)$ but this time the photometric invariance are extracted from transformed triangles.

Next in the flowchart of Figure 11, step 810 is executed. Step 810 performs steps 1012, 1016, 1020, and 1024 of FIG. 10. The difference is that step 810 takes its input from steps 804 and 808, the geometric/photometric properties of transformed triangles.

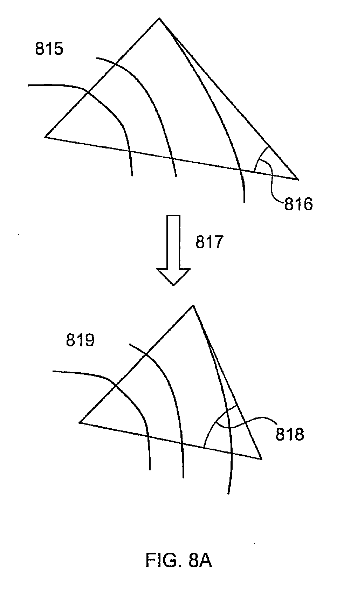

FIG. 8A describes the linear or nonlinear transform in terms of operations on geometric invariants of the triangle. FIG. 8A provides an example of a local transformation of the geometric and photometric properties of a piece of fingerprint image data. It is to be appreciated that FIG. 8A represents one exemplary way of performing 802 in FIG. 11, the transformation of local image features. The mapping 817 takes a triangle of fingerprint data 815 as input and transforms the triangle through a linear function. The transform might be described as
"Decrease the largest edge of the triangle by 20 %;"
or
"Multiply the smallest angle by a factor 1.5."

In the case of FIG. 8A, triangle 815 is mapped 817 to triangle 819, specifically by increasing the smallest angle of triangle 815, namely angle 816, by 50% resulting in triangle 819 with angle 818. These transforms can be made nonlinear, for example, as
"Decrease the largest edge length $e_1$ to the square root of $e_1$ ;"
or
"Take the smallest angle and square it."

In both cases, this is achieved by mapping the image data within triangle 815 into the triangle 819 and resampling the data. It is immediately clear that if the input triangle is small, the mapping will be imprecise. The mapping 817 needs to be defined as a unique, one-to-one mapping.

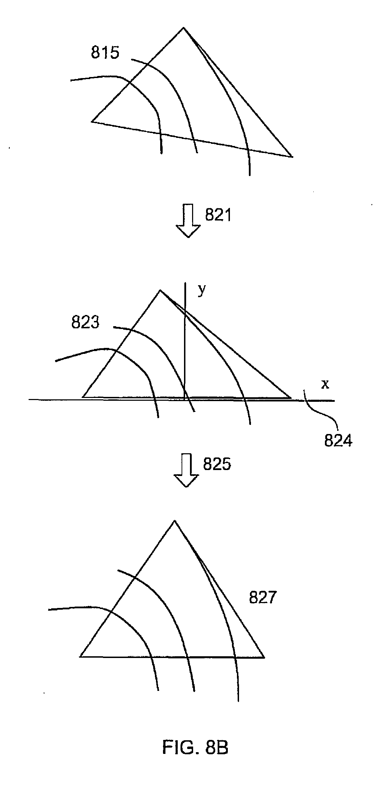

FIG. 8B describes the linear or nonlinear transform in terms of a sequence of operations on the triangle. Again, triangle 815 is the input to the transformation. As a first step 821, the triangle is put in canonical position through a Euclidean transform.

Here, as an example, the largest edge is aligned with the x-axis, the y-axis intersects the largest edge in the middle. In general, one of the invariants is estimated and the triangle is transformed so that the invariant is placed in a canonical position.

Transformation 821 provides image data 823, positioned in the xy coordinate system 824. The transform 825, again, can be linear
$(x', y')^T = \text{Diag} (0.8 \ 1) (x \ y)^T$,
i.e., defined as an affine transformation. In this case, we have $x' = 0.8 \cdot x$; $y' = y$, but in general the matrix does not have to be diagonal. The transform can be nonlinear, for example

x' = sqrt (x); y' = y.

Alternatively this can be achieved by mapping the triangle 815 into some canonical position in a polar coordinate system, followed by an affine transform of the polar coordinates (r, h) -- r the radial coordinate and h the angular coordinate (often called the polar angle). The canonical position could be the alignment of the largest edge with the r axis. Essentially, any of the geometric constraints or invariants of the triangle can be used to transform a triangle to a canonical position.

The above described methods rely on transforming the triangles, essentially performing specific distortions on pieces of image data. In United States Patent Application 09/595,935, entitled "System and Method for Distorting a Biometric for Transactions with Enhanced Security and Privacy", filed June 16, 2000, commonly assigned to the assignee herein, and incorporated by reference herein in its entirety, these are called signal transformations. When dealing with triangular representations of fingerprints, more preferred methods to obscure identities by transforming the triangles, called template transformation, are discussed in FIGs., 8C and D.

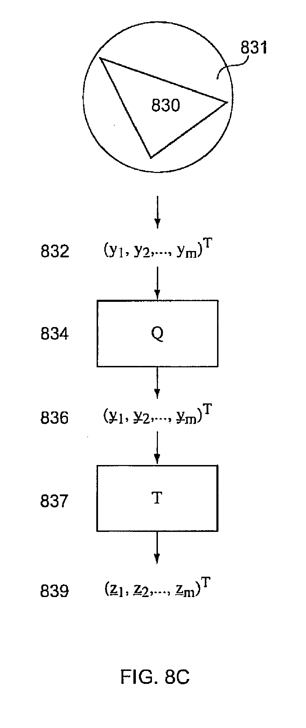

FIG. 8C describes the process of mapping a triangle described by a unique set of numbers $y_1$, $y_2$, $y_3$, ..., $y_m$ to a different set of unique quantized numbers $\underline{z}_1$, $\underline{z}_2$, $\underline{z}_3$, ..., $\underline{z}_m$. Input is a fingerprint image triangle 830 with its surrounding image data 831. Using the above described methods, from the geometric data of 830 (as in step 1004 of FIG. 10) and the photometric data of 831 (step 1008 of FIG. 10), again a vector $(y_1, y_2,..., Y_n)^T$ is constructed, whose components are uncorrected (as in step 1020 of FIG. 10). Next, in 834 the vector $(y_1, y_2,..., y_n)^T$ is quantized and truncated to a vector of m components: $(\underline{y}_1, \underline{y}_2,..., \underline{y}_m)^T$, preferably as described in FIG. 7G. In this case, the transform is indicated by a quantization/truncation operation $\underline{Y} = Q\ Y$. Each instance of this vector 836, $\underline{Y} = (\underline{y}_1, \underline{y}_2,..., \underline{y}_m)^T$, is one of a quantized, finite number of possible triangles. Essentially any transform T of step 837

$$(\underline{z}_1,\ \underline{z}_2,...,\ \underline{z}_m)^T\ =\ \underline{Z}\ =\ T\ \underline{Y}\ =\ (\underline{y}_1,\ \underline{y}_2,...,\ \underline{y}_m)^T$$

that is one-to-one, maps a unique triangle $\underline{Y}$ to a triangle 839 described by $\underline{Z} = (\underline{z}_1, \underline{z}_2,..., \underline{z}_m)^T$. Preferably this one-to-one mapping is nonlinear so that the transformation has no unique one-to-one inverse transform

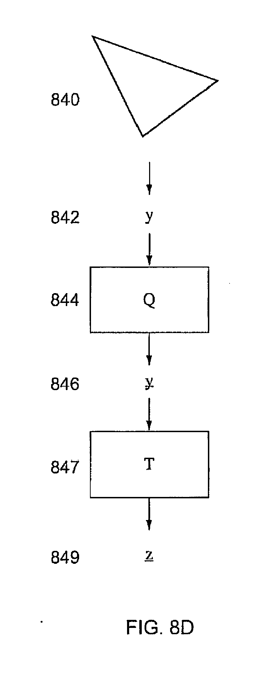

FIG. 8D describes the process of mapping a triangle 840 described by a unique set of numbers $y_1$, $y_2$, $y_3$, ..., $y_m$ and transformed to a unique single number y 842. This number 842 is subsequently quantized through transformation Q of step 844, i.e., $\underline{y} = Q\ y$: single unique number 846 associated with triangle 840. This is achieved through the method described in FIG. 7I.) Next, essentially any transform T of step 847

$$\underline{z}\ =\ T\ \underline{y}$$

is a one-to-one mapping from a set of N numbers to another set of N numbers. This maps a unique triangle $\underline{y}$ to a triangle 849 described by $\underline{z}$. Preferably this one-to-one mapping is nonlinear so that the transformation has no unique one-to-one inverse transform.

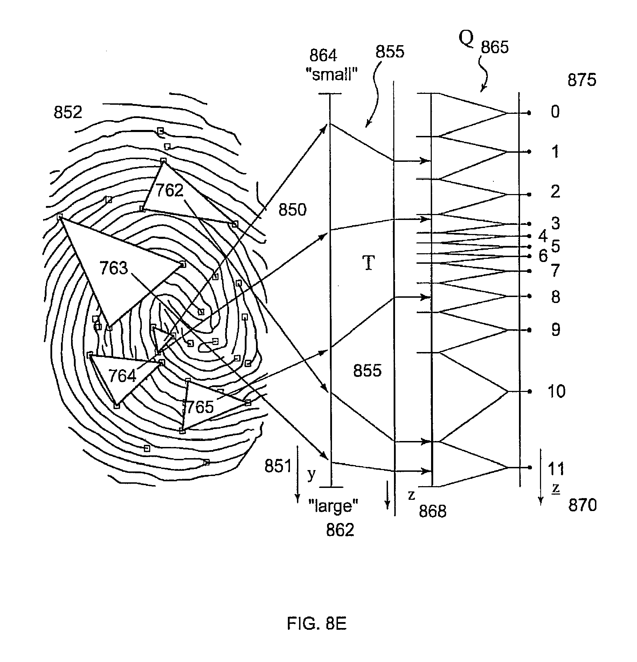

Alternatively, as explained in FIG. 8E, it is within the scope of the present invention that variable y is transformed first and then quantized, that is,

$$z\ =\ T\ y\quad \text{followed by}\quad \underline{z}\ =\ Q\ z.$$

This essentially amounts to reranking, renumbering, reordering the triangles thereby privatizing representation of the fingerprint representations.

FIG. 8E describes the process of reordering triangles. We have a fingerprint as in FIG. 7I and again extract the triangles 762-765. As in Figure 7I, the invariants of the triangles are mapped 850 into a 1D variable y (851) on a range from "small" 864 to "large" 862. This unique number y is transformed through a second mapping T depicted as 855

$$z\ =\ T\ y$$

This is a one-to-one mapping privatizing the triangles to a scale z 868. The table Q 865 finally assigns a set of transformed triangles $\underline{z}$ 870 also numbered from 0-11 (as in Figure 7I); the quantized $\underline{z}$ enumerated from 0 to 11 (875).

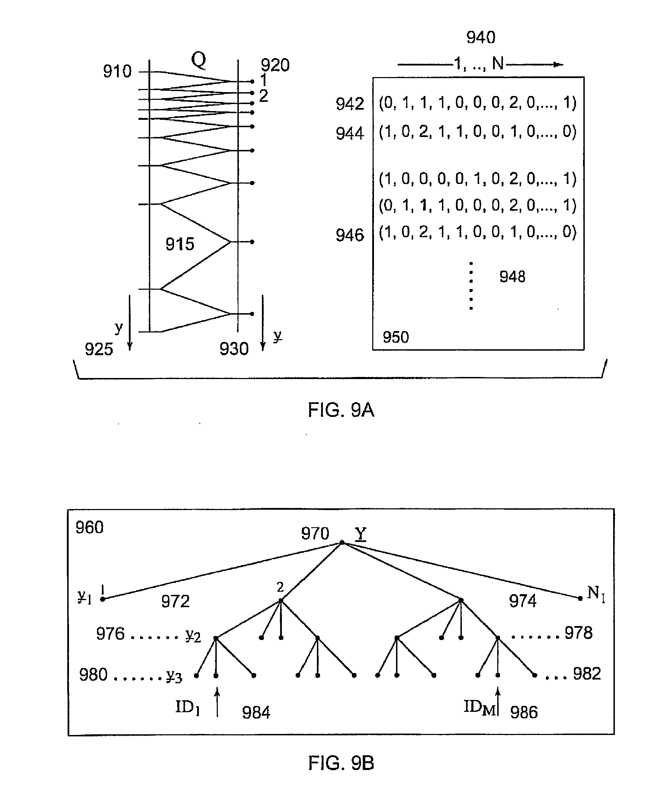

FIGs. 9A and 9B show that by ordering or enumerating one or more features, fingerprint database representations can be designed using different type of data structures.

In particular, FIG. 9A shows on the left the quantization table 915 (or ordering mechanism) Q. The unique number y 925 associated with a particular triangle is quantized into $\underline{y}$ 930. Hence, the real valued number y of 910 is converted to $\underline{y}$ one of a finite number N of possible triangles of 920. Consequently, a fingerprint impression is expressed by a subset of the N triangles, where duplicate triangles may exist. Depending on the size of N (which should be much larger than the size M of the database of fingerprints) the occurrence of duplicates becomes rarer and rarer. The representation then of a fingerprint is a vector as vectors 942 through 946 and so on 948. As indicated by 940, the length of the vectors is N and if N is large, the vector is sparse. The data structure 950 is sparse too, which might make in-memory string matching an impossibility. It is to be appreciated that other representations of these lists of numbers are within the scope of this invention.

FIG. 9B gives a dense tree structure 960 that represents a database of M fingerprints associated with the M identities $ID_1$ 984 through $ID_M$ 986. Each element in the database of M identities is described by a truncated vector $\underline{Y}$ 970 of quantized elements $\underline{Y} = (\underline{y}_1, \underline{y}_2,..., \underline{y}_m)^T$. The first component of this vector $\underline{y}_1$ can take on $N_1$ different values 972 through 974. The second component of the vector $\underline{y}_2$ can take on $N_2$ different values 976 through 978. The third component, in turn, $\underline{y}_3$ can take on $N_3$ different values 980 through 982. At the m-th level of the tree, the leaf nodes represent the unique identities $ID_1$ through $ID_M$ 984 through 986. There is a total of $N = N_1 . N_2 ... N_m$ of possible fingerprints. Of these, only a portion M is occupied by elements $\underline{Y}$ in the database.

These and other features and advantages of the present invention may be readily ascertained by one of ordinary skill in the pertinent art based on the teachings herein. It is to be understood that the teachings of the present invention may be implemented in various forms of hardware, software, firmware, special purpose processors, or combinations thereof. Most preferably, the teachings of the present invention are implemented as a combination of hardware and software. Moreover, the software is preferably implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit. It is to be further understood that, because some of the constituent system components and methods depicted in the accompanying drawings are preferably implemented in software, the actual connections between the system components or the process function blocks may differ depending upon the manner in which the present invention is programmed. Given the teachings herein, one of ordinary skill in the pertinent art will be able to contemplate these and similar implementations or configurations of the present invention.

**Claims**

1. An apparatus for generating a revocable numerical representation of a biometric characteristic, comprising:

   a biometric feature extractor arranged to:

      extract data identifying predetermined features from a biometric characteristic depicted in an image;
      define at least one polygon, wherein the or each such polygon is determined by the position within the image of at least some of the features, each polygon having at least one geometric feature, which is invariant with respect to similarity transforms, this representation forming a first geometric part of the extracted data;
      a photometric feature extractor arranged to extract from the image defining data at least one predetermined photometric feature, which feature is non-geometric and invariant with respect to any rigid transform applied to said data defining the portion of the image, said photometric feature being associated with an image region containing at least one part of a polygon; and
      transform said data defining said at least one photometric feature by applying a decorrelating transform, this representation forming a second photometric part of the extracted data;
      create a combined representation by concatenating the geometric part of the extracted data and the transformed photometric part of the extracted data;
      a data transformer arranged to apply a numerical transform to the combined representation, wherein said data transformer is further arranged to apply a predetermined distortion to the combined representation before applying the numerical transform thereby creating a revocable numerical representation of the biometric characteristic.

**2.** The apparatus of claim 1, wherein the data transformer is arranged to generate said at least one transformed feature representation with at least one element that is not correlated with other elements in the at least one transformed feature representation, wherein the at least one element and at least one of the other elements form an element set of elements that are mutually uncorrelated, the element set providing said data defining said transformed feature representation in the numerical representation of the biometric characteristic.

**3.** The apparatus of claim 2, wherein the at least one transformed feature representation has the at least one element that is not correlated with the other elements in the at least one transformed feature representation by more than a correlation tolerance.

**4.** The apparatus of claim 2, wherein at least one of the other elements that is correlated is omitted from the element set.

**5.** The apparatus of claim 2, wherein the element set is used as an index to represent at least one of the biometric characteristic and the image for at least one of:

hashing;
an identification process; and
a selection process.

**6.** The apparatus of claim 5, wherein the index is an n-based index, a magnitude of a number of bits of the n-based index is determined by a degree of correlation between at least two transformed feature representation axes.

**7.** The apparatus of claim 2, wherein the at least one transformed feature representation has at least three elements, including at least one uncorrelated element and at least one correlated element arranged in descending order by a degree of correlation, at least one of the at least one correlated element being omitted so that remaining ones of the at least three elements form an element set of at least two elements that are mutually uncorrelated, the element set being quantized into an n-bit index used to represent the biometric characteristic.

**8.** The apparatus of claim 7, where the data transformer is arranged to quantize the element set including at least one of:

deleting geometric shapes that exceed a correlation threshold;
permitting only a maximum number of any of the least one polygon;
reducing any of the at least one polygon to a simpler representation; and
reducing any of the at least one polygon to a single unique identifier.

**9.** The apparatus of claim 1, further comprising an ordering device for arranging the at least one element and the other elements of the at least one transformed feature representation in descending order by a degree of correlation.

**10.** The apparatus of claim 1, wherein an enrolment image is represented by an enrolment template, the enrolment template being at least one of the at least one polygon ordered by a degree of non-correlation of any of the at least one geometric feature associated with the at least one of the at least one polygon.

**11.** A method for generating a revocable numerical representation of a biometric characteristic, comprising:

extracting data identifying predetermined features from a biometric characteristic depicted in an image;
defining at least one polygon, wherein the or each such polygon is determined by the position within the image of at least some of the features, each polygon having at least one geometric feature, which is invariant with respect to similarity transforms, this representation forming a first geometric part of the extracted data;
extracting from, by a photometric feature extractor, the image defining data at least one predetermined photometric feature, which feature is non-geometric and invariant with respect to any rigid transform applied to said data defining the portion of the image, said photometric feature being associated with an image region containing at least one part of a polygon; and
transforming said data defining said at least one photometric feature by applying a decorrelating transform, this representation forming a second photometric part of the extracted data;
creating a combined representation by concatenating the geometric part of the extracted data and the transformed photometric part of the extracted data;
applying, by a data transformer, a numerical transform to the combined representation, wherein said data transformer is further arranged to apply a predetermined distortion to the combined representation before applying the numerical transform thereby creating a revocable numerical representation of the biometric characteristic.

**12.** The method of claim 11, wherein the at least one transformed feature representation has at least one element that is not correlated with other elements in the at least one transformed feature representation, and wherein the at least one element and at least one of the other elements form an element set of elements that are mutually uncorrelated, the element set providing said data defining said transformed feature representation in the numerical representation of the biometric characteristic.

**13.** The method of claim 12, wherein the element set is used as an index to represent at least one of the biometric characteristic and the image for at least one of:

hashing;
an identification process; and
a selection process.

**14.** The method of claim 12, further comprising the steps of:

arranging, in descending order by a degree of correlation, at least one uncorrelated element and at least one correlated element of the at least one transformed feature representation;
omitting at least one of the at least one correlated element so that remaining ones of the at least one uncorrelated element and the at least one correlated element form an element set of at least two elements that are mutually uncorrelated; and
quantizing the element set into an n-bit index used to represent the biometric characteristic.

**15.** The method of claim 11, further comprising the step of arranging the at least one element and the other elements of the at least one transformed feature representation in descending order by a degree of correlation.

**16.** The method of claim 11, further comprising the steps of:

storing enrollment templates;
receiving a query template, the query template being at least one of the at least one polygon ordered by a degree of non-correlation of any of the at least one geometric feature associated with the at least one of the at least one polygon;
comparing the query template to the stored enrollment templates; and
outputting a comparison result for identifying at least one enrolled image most similar to a query image corresponding to the query template.

**17.** A computer program comprising program code means adopted to perform all the steps of any one of claims 11 to 16 when said program is run on a computer.

**Patentansprüche**

**1.** Vorrichtung zum Erzeugen einer widerrufbaren numerischen Darstellung einer biometrischen Kennlinie, wobei die Vorrichtung umfasst:

eine Einheit zum Entnehmen von biometrischen Merkmalen, wobei die Einheit geeignet ist zum:

Entnehmen von Daten, die vorgegebene Merkmale aus einer biometrischen Kennlinie kennzeichnen, welche in einem Bild dargestellt wird;
Festlegen mindestens eines Vielecks, wobei das eine oder jedes solcher Vielecke durch die Position mindestens einiger Merkmale in dem Bild festgelegt wird und wobei jedes Vieleck mindestens ein geometrisches Merkmal aufweist, das sich bei Ähnlichkeitstransformationen invariant verhält, und wobei diese Darstellung einen ersten geometrischen Teil der entnommenen Daten bildet;

eine photometrische Merkmal-Entnahmeeinheit, die zum Entnehmen mindestens eines vorgegebenen photometrischen Merkmals aus den Daten geeignet ist, die das Bild festlegen, wobei es sich bei dem Merkmal um ein nichtgeometrisches und bei allen starren Transformationen invariantes Merkmal handelt, wenn die Transformation auf die Daten angewendet wird, die den Bildteil festlegen,
wobei das photometrische Merkmal einem Bildbereich zugehörig ist, der mindestens einen Vieleckabschnitt beinhaltet; und
Umformen der Daten durch Anwenden einer Entkorrelierungs-Umformung, wobei die Daten das mindestens eine photometrische Merkmal festlegen und diese Darstellung einen zweiten photometrischen Teil der entnommenen Daten bilden;
Erzeugen einer kombinierten Darstellung durch Verketten des geometrischen Abschnitts des entnommenen Teils und des umgeformten photometrischen Teils der entnommenen Daten;
einen Datenwandler, der zum Anwenden einer numerischen Transformation auf die kombinierte Darstellung geeignet ist, wobei der Datenwandler ferner zum Anwenden einer vorgegebenen Verzerrung auf die kombinierte Darstellung geeignet ist, bevor die numerische Umformung angewendet wird, wodurch eine widerrufbare numerische Darstellung der biometrischen Kennlinie erzeugt wird.

2. Vorrichtung nach Anspruch 1, wobei der Datenwandler zum Erzeugen der mindestens einen umgeformten Merkmal-Darstellung mit mindestens einem Element geeignet ist, das mit anderen Elementen in der mindestens einen umgeformten Merkmal-Darstellung nicht korreliert, wobei das mindestens eine Element und mindestens eines der anderen Elemente einen Elementsatz von Elementen bilden, die miteinander nicht korrelieren, wobei der Elementsatz die Daten bereitstellt, die die umgeformte Merkmaldarstellung in der numerischen Darstellung der biometrischen Kennlinie festlegen.

3. Vorrichtung nach Anspruch 2, wobei die mindestens eine umgeformte Merkmaldarstellung das mindestens eine Element aufweist, das mit den anderen Elementen in der mindestens einen umgeformten Merkmaldarstellung nicht mehr als eine Korrelationstoleranz korreliert.

4. Vorrichtung nach Anspruch 2, wobei das mindestens eine korrelierende Element unter den anderen Elementen von dem Elementsatz ausgenommen ist.

5. Vorrichtung nach Anspruch 2, wobei der Elementsatz als ein Index zum Wiedergeben mindestens der biometrischen Kennlinie oder des Bildes für Folgendes verwendet wird:

   ein Hashverfahren;
   einen Identifikationsprozess; und
   einen Auswahlprozess.

6. Vorrichtung nach Anspruch 5, wobei es sich bei dem Index um einen n-Bit-Index handelt und eine Bitanzahl des n-Bit-Index durch einen Korrelationsgrad zwischen mindestens zwei umgeformten Merkmal-Darstellungsachsen handelt.

7. Vorrichtung nach Anspruch 2, wobei die mindestens eine umgeformte Merkmaldarstellung mindestens drei Elemente aufweist, darunter mindestens ein nichtkorrelierendes Element und mindestens ein korrelierendes Element in einer nach dem Korrelationsgrad absteigenden Reihenfolge, wobei das eine nichtkorrelierende oder mindestens eines der nichtkorrelierenden Elemente ausgenommen sind, sodass die verbleibenden Elemente der mindestens drei Elemente einen Elementsatz aus mindestens zwei Elementen bilden, die miteinander nicht korrelieren, wobei der Elementsatz in einen n-Bit-Index quantisiert wird, der zum Wiedergeben der biometrischen Kennlinie verwendet wird.

8. Vorrichtung nach Anspruch 7, wobei der Datenwandler zum Quantisieren des Elementsatzes einschließlich mindestens eines des Folgenden geeignet ist:

   Löschen geometrischer Formen, die einen Korrelations-Schwellenwert übersteigen;
   Erlauben einer ausschließlichen Höchstanzahl aller Vielecke der mindestens einfach vorhandenen Vielecke;
   Rückführen eines beliebigen Vielecks aus den mindestens einfach vorhandenen Vielecken auf eine einfachere Darstellung; und
   Rückführen eines beliebigen Vielecks aus den mindestens einfach vorhandenen Vielecken auf einen einzigen eindeutigen Bezeichner.

9. Vorrichtung nach Anspruch 1, die ferner eine Anordnungseinheit zum Anordnen des mindestens einen Elements und der anderen Elemente der mindestens einen umgeformten Merkmaldarstellung in eine nach dem Korrelationsgrad absteigende Reihenfolge umfasst.

10. Vorrichtung nach Anspruch 1, wobei ein Registrierungsbild durch eine Registrierungsvorlage wiedergeben wird und es sich bei der Registrierungsvorlage um mindestens eines der wenigstens einfach vorhandenen Vielecke handelt, die nach dem Grad der Nichtkorrelation irgendeines Merkmals der wenigstens einfach vorhandenen geometrischen Merkmale, die zu dem mindestens einen Vieleck gehören, angeordnet sind.

11. Verfahren zum Erzeugen einer widerrufbaren numerischen Darstellung einer biometrischen Kennlinie, wobei das Verfahren umfasst:

Entnehmen von Daten, die vorgegebene Merkmale aus einer biometrischen Kennlinie kennzeichnen, welche in einem Bild dargestellt wird;
Festlegen mindestens eines Vielecks, wobei das eine oder jedes solcher Vielecke durch die Position mindestens einiger Merkmale in dem Bild festgelegt wird und wobei jedes Vieleck mindestens ein geometrisches Merkmal aufweist, das sich bei Ähnlichkeitstransformationen invariant verhält, und diese Darstellung einen ersten geometrischen Teil der hergeleiteten Daten bildet;
Entnehmen mindestens eines vorgegebenen photometrischen Merkmals aus den Daten durch eine photometrische Merkmal-Entnahmeeinheit, wobei die Daten das Bild festlegen und es sich bei dem Merkmal um ein nichtgeometrisches und bei allen starren Transformationen invariantes Merkmal handelt, wenn die Transformation auf die Daten angewendet wird, die den Bildabschnitt festlegen, wobei das photometrische Merkmal einem Bildbereich zugehörig ist, der mindestens einen Vieleckabschnitt beinhaltet; und Umformen der Daten durch Anwenden einer Entkorrelierungs-Umformung, wobei die Daten das mindestens eine photometrische Merkmal festlegen und diese Darstellung einen zweiten photometrischen Teil der entnommenen Daten bilden;
Erzeugen einer kombinierten Darstellung durch Verketten des geometrischen Teils der entnommenen Daten und des umgeformten photometrischen Teils der hergeleiteten Daten;
Anwenden einer numerischen Transformation auf die kombinierte Darstellung durch einen Datenwandler, wobei der Datenwandler ferner zum Anwenden einer vorgegebenen Verzerrung auf die kombinierte Darstellung geeignet ist, bevor die numerische Umformung angewendet wird, wodurch eine widerrufbare numerische Darstellung der biometrischen Kennlinie erzeugt wird.

12. Verfahren nach Anspruch 11, wobei die mindestens eine umgeformte Merkmaldarstellung mindestens ein Element aufweist, das nicht mit anderen Elementen in der mindestens einen umgeformten Merkmaldarstellung korreliert und wobei das mindestens eine Element und mindestens eines der anderen Elemente einen Elementsatz von Elementen bilden, die miteinander nicht korrelieren, wobei der Elementsatz Daten bereitstellt, die die umgeformte Merkmaldarstellung in der numerischen Wiedergabe der biometrischen Kennlinie festlegen.

13. Verfahren nach Anspruch 12, wobei der Elementsatz als ein Index zum Wiedergeben mindestens der biometrischen Kennlinie oder des Bildes für wenigstens eines des Folgenden verwendet wird:

ein Hashverfahren;
einen Identifikationsprozess; und
einen Auswahlprozess.

14. Verfahren nach Anspruch 12, das ferner die Schritte umfasst:

Anordnen mindestens eines nichtkorrelierenden Elements und mindestens eines korrelierenden Elements aus der mindestens einen umgeformten Merkmaldarstellung in einer nach einem Korrelationsgrad absteigenden Reihenfolge;
Ausnehmen mindestens eines der mindestens einfach vorhandenen korrelierenden Elemente, sodass die verbleibenden Elemente der mindestens einfach vorhandenen nichtkorrelierenden Elemente und des mindestens einen korrelierenden Elements einen Elementsatz aus mindestens zwei Elementen bilden, die miteinander nicht korrelieren; und
Quantisieren des Elementsatzes in einen n-Bit-Index, der zum Wiedergeben der biometrischen Kennlinie verwendet wird.

15. Verfahren nach Anspruch 11, das ferner den Schritt des Anordnens des mindestens einen Elements und der anderen Elemente der mindestens einen umgeformten Merkmaldarstellung in einer nach einem Korrelationsgrad absteigenden Reihenfolge umfasst.

**16.** Verfahren nach Anspruch 11, das ferner die Schritte umfasst:

Speichern der Registrierungsvorlagen;
Empfangen einer Abfragevorlage, wobei es sich bei der Abfragevorlage um mindestens eines der mindestens einfach vorhandenen Vielecke handelt, die nach einem Grad der Nichtkorrelation irgendeines Merkmals der mindestens einfach vorhandenen geometrischen Merkmale angeordnet sind, wobei das geometrische Merkmal dem mindestens einen Vieleck aus den mindestens einfach vorhandenen Vielecken zugehörig ist;
Vergleichen der Abfragevorlage mit den gespeicherten Registrierungsvorlagen; und
Ausgeben eines Vergleichsergebnisses zum Kennzeichnen mindestens eines registrierten Bildes, das am besten mit einem Abfragebild übereinstimmt, welches der Abfragevorlage entspricht.

**17.** Computerprogramm, das Computerprogramm-Code-Mittel umfasst, die zum Ausführen aller Schritte irgendeines Anspruchs der Ansprüche 11 bis 16 geeignet sind, wenn das Programm auf einem Computer ausgeführt wird.

**Revendications**

**1.** Dispositif pour générer une représentation numérique révocable d'une caractéristique biométrique, comprenant :

un extracteur d'attributs biométriques agencé pour :

extraire des données identifiant des attributs prédéterminés à partir d'une caractéristique biométrique représentée dans une image ;
définir au moins un polygone, le ou chaque polygone étant déterminé par la position dans l'image d'au moins certains des attributs, chaque polygone ayant au moins un attribut géométrique qui est invariant par rapport à des transformations de similitude, cette représentation formant une première partie géométrique des données extraites ;
un extracteur d'attributs photométriques agencé pour extraire de l'image des données définissant au moins un attribut photométrique prédéterminé, l'attribut étant non géométrique et invariant par rapport à une transformation rigide appliquée auxdites données définissant la partie de l'image, ledit attribut photométrique étant associé à une région d'image contenant au moins une partie d'un polygone ; et
transformer lesdites données définissant ledit au moins un attribut photométrique en appliquant une transformation de décorrélation, cette représentation formant une seconde partie photométrique des données extraites ;
créer une représentation combinée en concaténant la partie géométrique des données extraites et la partie photométrique transformée des données extraites ;
un transformateur de données agencé pour appliquer une transformation numérique à une représentation combinée, ledit transformateur de données étant en outre agencé pour appliquer une distorsion prédéterminée à la représentation combinée avant d'appliquer la transformation numérique, créant ainsi une représentation numérique révocable de la caractéristique biométrique.

**2.** Dispositif selon la revendication 1, dans lequel le transformateur de données est agencé pour générer ladite au moins une représentation d'attributs transformés avec au moins un élément qui n'est pas corrélé avec d'autres éléments dans ladite au moins une représentation d'attributs transformés, ledit au moins un élément et au moins l'un des autres éléments formant un ensemble d'éléments des éléments qui sont mutuellement non corrélés, l'ensemble d'éléments fournissant lesdites données définissant ladite représentation d'attributs transformés dans la représentation numérique de la caractéristique biométrique.

**3.** Dispositif selon la revendication 2, dans lequel ladite au moins une représentation d'attributs transformés a ledit au moins un élément qui n'est pas corrélé avec les autres éléments dans ladite au moins une représentation d'attributs transformés par plus d'une tolérance de corrélation.

**4.** Dispositif selon la revendication 2, dans lequel au moins un des autres éléments qui est corrélé est omis de l'ensemble d'éléments.

**5.** Dispositif selon la revendication 2, dans lequel l'ensemble d'éléments est utilisé en tant qu'index pour représenter au moins l'une de la caractéristique biométrique et de l'image pour au moins l'un de :

un hachage ;
un procédé d'identification ; et
un procédé de sélection.

**6.** Dispositif selon la revendication 5, dans lequel l'index est un index de base n, un montant d'un nombre de bits de l'index de base n est déterminée par un degré de corrélation entre au moins deux axes de représentation d'attributs transformés.

**7.** Dispositif selon la revendication 2, dans lequel ladite au moins une représentation d'attributs transformés a au moins trois éléments, incluant au moins un élément non corrélé et au moins un élément corrélé agencés dans un ordre décroissant par un degré de corrélation, au moins l'un dudit au moins un élément corrélé étant omis de sorte que ceux restants desdits au moins trois éléments forment un ensemble d'éléments d'au moins deux éléments qui sont mutuellement non corrélés, l'ensemble d'éléments étant quantifié en un index de n bits utilisé pour représenter la caractéristique biométrique.

**8.** Dispositif selon la revendication 7, dans lequel le transformateur de données est agencé pour quantifier l'ensemble d'éléments incluant au moins l'un de :

supprimer des formes géométriques qui dépassent un seuil de corrélation ;
permettre un nombre maximum seulement du ou des polygones ;
réduire le ou les polygones à une représentation simplifiée ; et
réduire le ou les polygones à un seul identifiant unique.

**9.** Dispositif selon la revendication 1, comprenant en outre une unité d'ordonnancement pour agencer ledit au moins un élément et les autres éléments de ladite au moins une représentation d'attributs transformés dans un ordre décroissant par un degré de corrélation.

**10.** Dispositif selon la revendication 1, dans lequel une image d'enrôlement est représentée par un modèle d'enrôlement, le modèle d'enrôlement étant au moins l'un dudit au moins un polygone ordonné par un degré de non-corrélation du ou des attributs géométriques associés audit au moins un dudit au moins un polygone.

**11.** Procédé pour générer une représentation numérique révocable d'une caractéristique biométrique, comprenant :

extraire des données identifiant des attributs prédéterminés à partir d'une caractéristique biométrique représentée dans une image ;
définir au moins un polygone, le ou chaque polygone étant déterminé par la position dans l'image d'au moins certains des attributs, chaque polygone ayant au moins un attribut géométrique qui est invariant par rapport à des transformations de similitude, cette représentation formant une première partie géométrique des données extraites ;
extraire, par un extracteur d'attributs photométriques, à partir des données définissant l'image au moins un attribut photométrique prédéterminé, l'attribut étant non géométrique et invariant par rapport à une transformation rigide appliquée auxdites données définissant la partie de l'image, ledit attribut photométrique étant associé à une région d'image contenant au moins une partie d'un polygone ; et
transformer lesdites données définissant ledit au moins un attribut photométrique en appliquant une transformation de décorrélation, cette représentation formant une seconde partie photométrique des données extraites ;
créer une représentation combinée en concaténant la partie géométrique des données extraites et la partie photométrique transformée des données extraites ;
appliquer, par un transformateur de données, une transformation numérique à la représentation combinée, ledit transformateur de données étant en outre agencé pour appliquer une distorsion prédéterminée à la représentation combinée avant d'appliquer la transformation numérique, créant ainsi une représentation numérique révocable de la caractéristique biométrique.

**12.** Procédé selon la revendication 11, dans lequel ladite au moins une représentation d'attributs transformés a au moins un élément qui n'est pas corrélé avec d'autres éléments dans ladite au moins une représentation d'attributs transformés, et dans lequel ledit au moins un élément et au moins l'un des autres éléments forment un ensemble d'éléments des éléments qui sont mutuellement non corrélés, l'ensemble d'éléments fournissant lesdites données définissant ladite représentation d'attributs transformés dans la représentation numérique de la caractéristique biométrique.

**13.** Procédé selon la revendication 12, dans lequel l'ensemble d'éléments est utilisé en tant qu'index pour représenter au moins l'une de la caractéristique biométrique et de l'image pour au moins l'un de :

un hachage ;
un procédé d'identification ; et
un procédé de sélection.

**14.** Procédé selon la revendication 12, comprenant en outre les étapes consistant à :

agencer, dans un ordre décroissant par un degré de corrélation, au moins un élément non corrélé et au moins un élément corrélé de ladite au moins une représentation d'attributs transformés ;
omettre au moins l'un dudit au moins un élément corrélé de sorte que ceux restants dudit au moins un élément non corrélé et dudit au moins un élément corrélé forment un ensemble d'éléments d'au moins deux éléments qui sont mutuellement non corrélés ; et
quantifier l'ensemble d'éléments en un index de n bits utilisé pour représenter la caractéristique biométrique.

**15.** Procédé selon la revendication 11, comprenant en outre l'étape consistant à agencer ledit au moins un élément et les autres éléments de ladite au moins une représentation d'attributs transformés dans un ordre décroissant par un degré de corrélation.

**16.** Procédé selon la revendication 11, comprenant en outre les étapes consistant à :

stocker des modèles d'enrôlement ;
recevoir un modèle de requête, le modèle de requête étant au moins l'un dudit au moins un polygone ordonnancé par un degré de non-corrélation du ou des attributs géométriques associés audit au moins un dudit au moins un polygone ;
comparer le modèle de requête aux modèles d'enrôlement stockés ; et
délivrer un résultat de comparaison pour identifier au moins une image enrôlée la plus similaire à une image de requête correspondant au modèle de requête.

**17.** Programme d'ordinateur comprenant un moyen de code de programme conçu pour réaliser toutes les étapes de l'une quelconque des revendications 11 à 16, lorsque ledit programme est exécuté sur un ordinateur.

130

110

FIG. 1A (Prior Art)

FIG. 1B (Prior Art)

140

120

FIG. 1C (Prior Art)

FIG. 1D (Prior Art)

200

Biometrics
signal
210 → Signal processing 215 → Template extraction 220 → Template matching 225 → Yes/No 240

Identifier
212 →

Templates/
Identities
230

FIG. 2A (Prior Art)

250

Biometrics
signal
210 → Signal processing 215 → Template extraction 220 → Template matching 225 → Identity 255

Templates/
Identities
230

FIG. 2B (Prior Art)

300

Biometrics
signal
210 → Transform
310 → Revocable
biometric
320 → Feature
extraction
330 → Template
340

FIG. 3A

350

Biometrics
signal
210 → Feature
extraction
360 → Template
370 → Encoding
380 → Revocable
template
390

FIG. 3B

FIG. 4

FIG. 5

FIG. 6

FIG. 7A

FIG. 7B

$X_1$
$X_2$
$X_3$
.
.
.
$X_t$

730

$\overline{X}$

$C_X = \frac{1}{t-1} \Sigma (X_i - \overline{X})^2$

Determine mean 732

Determine covariance matrix 734

$C_X$ → Determine eigenvalues 736 → $K = \begin{pmatrix} v_1^t \\ v_2^t \\ . \\ . \\ . \\ v_m^t \end{pmatrix}$

FIG. 7C

FIG. 7D

FIG. 7E

FIG. 7F

FIG. 7G

FIG. 7H

FIG. 7I

815

816

817

819

818

FIG. 8A

FIG. 8B

831

830

832    $(y_1, y_2,..., y_m)^T$

834    Q

836    $(\slashed{y}_1, \slashed{y}_2,..., \slashed{y}_m)^T$

837    T

839    $(\slashed{z}_1, \slashed{z}_2,..., \slashed{z}_m)^T$

FIG. 8C

EP 1 825 418 B1

840

842    y

844  | Q |

846    y

847  | T |

849    z

FIG. 8D

39

FIG. 8E

940

910   Q   920

942   (0, 1, 1, 1, 0, 0, 0, 2, 0,..., 1)

944   (1, 0, 2, 1, 1, 0, 0, 1, 0,..., 0)

(1, 0, 0, 0, 0, 1, 0, 2, 0,..., 1)

(0, 1, 1, 1, 0, 0, 0, 2, 0,..., 1)

946   (1, 0, 2, 1, 1, 0, 0, 1, 0,..., 0)

948

915

950

925    930

**FIG. 9A**

960

970   $\underline{Y}$

$y_1$    972    2    974    $N_1$

976 ...... $y_2$    978

980 ...... $y_3$    982

$ID_1$    984    $ID_M$    986

**FIG. 9B**

1000

Input geometric feature information and
select invariant geometric features ⟩—1004

↓

Input image features and combine with
geometric features (OPTIONAL) ⟩—1008

↓

Transform the features from step 1004
and 1008 (e.g., using KLT) ⟩—1012

↓

Drop lower order/energy terms
(OPTIONAL) ⟩—1016

↓                                    ↓

Quantize and enumerate          Order, quantize and
                                     enumerate

1020                               1024

FIG. 10

Transform local image features ⌐⌐802

Input geometric feature information ⌐⌐804

Input image features and combine with
geometric features (OPTIONAL) ⌐⌐808

810

Transform the features from step 804
and 808 (e.g., using KLT) ⌐⌐1012

Drop lower order/energy terms
(OPTIONAL) ⌐⌐1016

Quantize and
enumerate

1020

Order, quantize and
enumerate

1024

FIG. 11

**REFERENCES CITED IN THE DESCRIPTION**

**Patent documents cited in the description**

- JP 6041133 B
- US 5590261 A
- US 5793868 A
- US 5666416 A
- US 5717758 A
- US 5261002 A
- US 4993068 A
- US 5434917 A
- US 59593500 A
- US 6072895 A
- US 6266433 B
- US 6041133 A
- US 09595935 B

**Non-patent literature cited in the description**

- **RATHA et al.** Adaptive Flow Orientation Based Feature Extraction in Fingerprint Images. *Pattern Recognition,* November 1995, vol. 28 (11), 1657-1672
- **BEBIS et al.** Fingerprint identification using Delaunay triangulation. *Proc. of Intl. Conf. on Information Intelligence and Systems,* 1999, 452-459
- **DE BOER et al.** Indexing fingerprint databases based on multiple features. *Proceedings of PRO RISC,* November 2001, 300-306
- **PETITCOLAS et al.** Evaluation of Copyright Marking Systems. *Proc. IEEE Multimedia Systems 99,* June 1999, vol. 1, 7-11, 574-579
- Advances in Fingerprint Technology. CRC Press
- **RATHA et al.** Adaptive Flow Orientation Based Texture Extraction in Fingerprint Images. *Journal of Pattern Recognition,* November 1995, vol. 28 (11), 1657-1672
- Computer Vision. Prentice Hall, 254-259
- **RUI et al.** Image Retrieval: Current Techniques, Promising Directions And Open Issues. *Journal of Visual Communication and Image Representation,* April 1999, vol. 10 (4), 39-62
- Pattern Classification. Wiley-Interscience, 2000